# EUROPEAN PATENT APPLICATION

(11) **EP 4 606 770 A1**
(43) Date of publication of application: **27.08.2025**
(21) Application number: 23878746.9
(22) Date of filing: 24.07.2023
(51) Int. Cl.: C01G 23/00, C01G 23/047, B82Y 40/00, B82Y 30/00

(54) **PREPARATION METHOD FOR AND USE OF DOPED NANOMETER BARIUM/LITHIUM TITANATE POWDER MATERIAL**

(30) Priority: 21.10.2022 CN 202211294326
(71) Applicant: Zhao, Yuanyun, Guangdong 523000 (CN)
(72) Inventor: Zhao, Yuanyun, Guangdong 523000 (CN)
(74) Representative: Boult Wade Tennant LLP
(86) International application number: PCT/CN2023/108957
(87) International publication number: WO 2024/082750

(57) **Abstract**

This application relates to a preparation method and application of doped nano barium titanate/lithium titanate powder materials. Using intermetallic compounds solid-soluted with doping elements as precursors, non-spherical nano titanate intermediate products are obtained by reacting the precursors with an alkaline solution. These intermediate powder products are then reacted with Ba²⁺/Li⁺-containing barium/lithium source materials under specific temperature, pressure, and atmospheric conditions for a certain period of time, resulting in cation exchange reactions and morphological transformation into "spherical" shapes. Consequently, spherical or near-spherical in-situ doped nano barium titanate/lithium titanate powder products are produced. This preparation method features a simple process, easy operation, and low cost. The resulting in-situ doped nano barium titanate/lithium titanate powder materials show promising application potential in fields such as electronic ceramics, composites, coatings, powder metallurgy, multilayer ceramic capacitors, thermistors, piezoelectric ceramics, and battery materials.

## Description

### Technical Field

The present invention relates to the field of nanomaterial technology, particularly to a preparation method and use of a doped nano barium titanate/lithium titanate powder material.

### Background Technology

Barium titanate (BaTiO₃) is a highly typical perovskite-structured crystal known for its high dielectric constant, low dielectric loss, high resistivity, high breakdown strength, and excellent insulating properties. It is a crucial raw material for multilayer ceramic capacitors (MLCCs). By doping various elements, such as rare earth elements, the performance of MLCCs can be further enhanced. Lithium titanate (Li₄Ti₅O₁₂) is a lithium-titanium composite oxide with a spinel structure. In the field of battery materials, it offers advantages such as excellent cycling performance, high chemical stability, low hygroscopicity in fully charged states, strong thermal stability, and compatibility with the stable voltage range of most liquid electrolytes, making it widely applicable in lithium-ion batteries and asymmetric supercapacitors. Currently, the primary preparation methods for barium titanate/lithium titanate include solid-state synthesis, chemical precipitation, hydrothermal synthesis, sol-gel method, and alkoxide hydrolysis. However, these methods either suffer from uneven sintering particle sizes or require complex equipment conditions, making them unsuitable for large-scale, low-cost production of barium titanate/lithium titanate.

Currently, the effective methods for preparing doped barium titanate particles are mainly hydrothermal synthesis and sol-gel processes. Both methods involve first creating a gel or suspension containing barium titanate precursors, during which the doping material can be added. After that, the mixture undergoes hydrothermal treatment or sintering to obtain doped barium titanate powder. However, this doping method only achieves uniform doping for certain materials, and developing new doping approaches and techniques that can significantly and cost-effectively increase the variety of dopable elements and doping content is of great significance for the application of doped barium titanate.

### Description of the Invention

Based on this, it is necessary to provide a large-scale, cost-effective preparation method for doped nano barium titanate/lithium titanate to address the above issues.

A method for preparing doped nano barium titanate/lithium titanate powder, comprising the following steps:
at step 1, preparing an initial alloy comprising T elements, Ti elements, and E elements; the phase composition of the initial alloy includes T-Ti(E) intermetallic compounds with E elements in solid solution or T-Ti-E intermetallic compounds containing E elements; wherein the molar ratio of E elements to Ti elements in the T-Ti(E) or T-Ti-E intermetallic compounds is 0 ≤ *C*_{E}/*C*_{Ti} ≤ 0.30; the T elements include at least one of Al and Zn, and the E elements include at least one of Zr, Hf, Cr, V, Nb, Ta, W, Mo, Mn, Fe, Ni, Co, Sn, Pb, Bi, B, Be, Au, Pt, Pd, Ru, Rh, Re, Os, Ir, Ag, Cu, and RE, wherein RE includes at least one of rare earth elements;
at step 2:
   the initial alloy is subjected to hydrogen evolution and T removal reaction with an alkaline solution mainly composed of NaOH/KOH to obtain intermediate powder products; the intermediate powder product mainly includes at least one of the following: nano sodium/potassium titanate thin-film powder with in-situ doped E element, irregular nanoporous sodium/potassium titanate powder with in-situ doped E element, nano sodium/potassium titanate tubes (or/and rods) with in-situ doped E element;
   alternatively, reacting the intermediate powder product composed of nano sodium/potassium titanate with in-situ doped E element with a dilute acid to obtain a hydrogen-ion-exchanged titanic acid intermediate powder product with in-situ doped E element, which mainly includes at least one of the following: nano titanic acid thin-film powder with in-situ doped E element; irregular nanoporous titanic acid powder with in-situ doped E element, nano titanic acid tubes (or/and rods) with in-situ doped E element;
   at step 3: reacting the intermediate powder product obtained in step 2 with a barium/lithium source material containing Ba²⁺/Li⁺ at a specific temperature, pressure, and medium atmosphere for a period of time, causing cation displacement reaction and "spheroidization" morphology change of such non spherical intermediate powder product, to obtain spherical or near-spherical barium/lithium nanoparticle powder product with in-situ doped E element.

In step 1:
Further, the T element includes Al; furthermore, the T element is Al.

Further, the T element includes Zn; furthermore, the T element is Zn.

Further, the T element includes Al and Zn.

Further, the RE includes at least one of the rare earth elements Y, La, Ce, Pr, Nd, Pm, Sm, Eu, Gd, Tb, Dy, Ho, Er, Tm, Yb, and Lu.

Further, the E element includes at least one of Zr, Hf, Cr, V, Nb, Ta, W, Mo, Mn, Sn, Pb, Bi, B, Be, and RE.

Further, the E element includes at least one of Zr, Hf, Cr, V, Nb, Ta, W, and Mo.

Further, the E element includes at least one of Mn, Sn, Pb, Bi, B, and Be.

Further, the E element mainly includes Ag, and the atomic percentage of Ag in the E element is greater than 50%.

Further, the E element mainly includes RE.

Further, when *C*_{E}/*C*_{Ti} = 0, meaning the initial alloy does not contain E elements, the subsequent product does not contain doped E elements.

Further, 0 ≤ *C*_{E}/*C*_{Ti} ≤ 0.25; further, 0 ≤*C*_{E}/*C*_{Ti} ≤ 0.20; further, 0 ≤*C*_{E}/*C*_{Ti} ≤ 0.10.

Further, 0 < *C*_{E}/*C*_{Ti} ≤ 0.30; further, 0 < *C*_{E}/*C*_{Ti} ≤ 0.25; further, 0 < *C*_{E}/*C*_{Ti} ≤ 0.20; further, 0 < *C*_{E}/*C*_{Ti} ≤ 0.10.

Further, the phase composition of the initial alloy mainly consists of T-Ti(E) intermetallic compounds with E elements in solid solution or T-Ti-E intermetallic compounds containing E elements.

Further, the T-Ti(E) intermetallic compound with E elements in solid solution refers to a structure where E element atoms exist as interstitial atoms in the lattice gaps of the T-Ti(E) intermetallic compound, or E element atoms replace T or Ti atoms in the lattice structure as substitutional atoms.

Further, the solid solution includes both interstitial solid solution and substitutional solid solution methods.

Further, the T-Ti-E intermetallic compound containing E elements refers to an intermetallic compound composed of T elements, Ti elements, and E elements, which differs from the T-Ti(E) intermetallic compound. In the T-Ti(E) intermetallic compound, E elements are in solid solution within the T-Ti intermetallic compound, whereas in the T-Ti-E intermetallic compound, E elements are a key component of the T-Ti-E intermetallic phase.

Further, when *C*_{E}/*C*_{Ti} = 0, the T-Ti(E) intermetallic compound does not contain E elements and is a T-Ti intermetallic compound.

Further, the initial alloy is prepared by solidifying a melt containing T elements, Ti element, and E elements, forming a solidified structure that includes T-Ti(E) intermetallic compounds or T-Ti-E intermetallic compounds during the solidification process. In this structure, E elements primarily dissolve into the T-Ti(E) intermetallic compound in solid solution.

Further, the solidification rate of the initial alloy melt ranges from 0.01 K/s to 10⁸ K/s.

Further, in general, the higher the cooling rate, the higher the solubility of E elements in the T-Ti(E) intermetallic compound. Under these conditions, the non-equilibrium solubility can be significantly higher than the equilibrium solubility.

Further, the T-Ti(E) intermetallic compound includes at least one of the T₃Ti(E), T₂Ti(E), or TTi(E) intermetallic compounds.

Further, in the initial alloy, the T-Ti(E) intermetallic compound consists of one or more sub-types of T-Ti(E) intermetallic compounds.

Further, in terms of shape, the average dimension of the initial alloy in any one of the three-dimensional directions is greater than 2 µm.

Further, the average dimension of the initial alloy in any one of the three-dimensional directions is greater than 5 µm.

Further, the average dimension of the initial alloy in any one of the three-dimensional directions is greater than 10 µm.

Further, the shape of the initial alloy includes at least one of block, granular, filamentous, strip, ribbon, or sheet.

Further, the initial alloy is in powder or ribbon form, with at least one dimension in the three-dimensional direction being smaller than 5 mm.

Further, the initial alloy powder particles or ribbons have at least one dimension in the three-dimensional direction smaller than 500 µm.

Preferably, the initial alloy powder particles or ribbons have at least one dimension in the three-dimensional direction smaller than 200 µm.

Preferably, the initial alloy powder particles or ribbons have at least one dimension in the three-dimensional direction smaller than 50 µm.

Further, when the initial alloy is in ribbon form, it can be prepared using methods such as the melt-spinning technique.

Further, when the initial alloy is in powder form, it can be prepared by first casting a larger alloy ingot and then crushing it into alloy powder.

In step 2:
Further, the alkaline solution contains at least one of NaOH, KOH solutions.

Preferably, the solvent in the alkaline solution is primarily water.

Further, the concentration of the alkali in the alkaline solution ranges from 2.1 to 30 mol/L; preferably, the concentration of the alkali in the alkaline solution ranges from 2.1 to 15 mol/L.

Further, the concentration of the alkaline solution refers to the effective concentration of NaOH/KOH. This application has found that only the effective concentration of NaOH/KOH is meaningful. Specifically, when the alkaline solution contains additional OH⁻sources from relatively weaker alkali such as LiOH, RbOH, Ba(OH)₂, Ca(OH)₂, and Sr(OH)₂, although the total OH⁻content may be higher than that contributed by NaOH and KOH, the OH⁻content contributed by these weaker alkali does not significantly impact the formation of the specific intermediate powder product in Step 2 through the hydrogen evolution T-removal reaction of the initial alloy.

Further, the NaOH/KOH in the alkaline solution reacting with the initial alloy is in excess, ensuring that the reaction continues at a relatively high alkaline concentration.

Further, the NaOH/KOH content in the alkaline solution reacting with the initial alloy exceeds 5 times the required reaction dosage.

Further, the NaOH/KOH content in the alkaline solution reacting with the initial alloy exceeds 10 times the required reaction dosage.

The higher the NaOH/KOH concentration and the temperature, the more intense the reaction with the initial alloy.

The hydrogen evolution and T-removal reaction refers to the reaction where the initial alloy reacts with the NaOH/KOH solution, dissolving T into the solution as a salt while releasing hydrogen gas.

Further, when the initial alloy is subjected to reaction with an alkaline solution mainly composed of NaOH/KOH, different reaction conditions result in different intermediate powder products:
(1) Under atmospheric pressure, when the NaOH/KOH concentration is relatively high and the alkaline solution temperature is high, the intermediate powder product mainly comprises nano sodium/potassium titanate thin-film powder with in-situ doped E element;

Preferably, by controlling the NaOH/KOH concentration and temperature so that the reaction interface progresses inward from the initial alloy surface at an average rate greater than 10 µm/min during the reaction with the alkaline solution primarily composed of NaOH/KOH, the intermediate powder product mainly consists of nano sodium/potassium titanate thin-film powder with in-situ doped E element;

Preferably, when the NaOH/KOH concentration is in the range of 5.1 to 30 mol/L and the alkaline solution temperature is greater than 100°C but does not exceed the boiling point (*T*_{*f*(solution)}) of the alkaline solution at that concentration, the intermediate powder product mainly consists of nano sodium/potassium titanate thin-film powder with in-situ doped E element;

Preferably, when the NaOH/KOH concentration is in the range of 7.5 to 30 mol/L and the temperature is at the boiling point (*T*_{*f*(solution)}) of the alkaline solution at that concentration, the intermediate powder product mainly consists of nano sodium/potassium titanate thin-film powder with in-situ doped E element;

At atmospheric pressure, the boiling point of pure water is 100°C. When an alkali is dissolved in water, the boiling point of the alkaline solution at 1 standard atmosphere exceeds 100°C, and the higher the alkali concentration, the higher the boiling point. For example: a 5.1 mol/L sodium hydroxide (NaOH) aqueous solution has a boiling point (*T*_{*f*(solution)}) of approximately 108°C; a 7 mol/L NaOH solution has a *T*_{*f*(solution)} of about 112°C; a 10 mol/L NaOH solution has a *T*_{*f*(solution)} of about 119°C; a 12 mol/L NaOH solution has a *T*_{*f*(solution)} of about 128°C; a 15 mol/L NaOH solution has a *T*_{*f*(solution)} of about 140°C; a 17 mol/L NaOH solution has a *T*_{*f*(solution)} of about 148°C; a 20 mol/L NaOH solution has a *T*_{*f*(solution)} of about 160°C; a 25 mol/L NaOH solution has a *T*_{*f*(solution)} of about 180°C. Similarly, for potassium hydroxide (KOH) solutions: a 10 mol/L KOH solution has a *T*_{*f*(solution)} of approximately 125°C; a 12 mol/L KOH solution has a *T*_{*f*(solution)} of about 136°C; a 15 mol/L KOH solution has a *T*_{*f*(solution)} of about 150°C.

During the reaction, the initial alloy undergoes intense hydrogen evolution and T removal reaction, resulting in nano-fragmentation and subsequent structural and compositional reconstruction, forming nano sodium/potassium titanate thin-film powder with in-situ doped E element;

The process of nano-fragmentation and structural and compositional reconstruction refers to the fragmentation of the T-Ti(E) intermetallic phase or T-Ti-E intermetallic phase in the initial alloy due to the hydrogen evolution and T removal reaction, forming nano sodium/potassium titanate thin-film with at least one dimension (thickness) in the three-dimensional structure smaller than 5 nm.

Further, the thickness of the nano sodium/potassium titanate thin-film with in-situ doped E element is less than 5 nm.

Further, the thickness of the nano sodium/potassium titanate thin-film with in-situ doped E element ranges from 0.25 nm to 4 nm.

Further, the thickness of the nano sodium/potassium titanate thin-film with in-situ doped E element ranges from 0.25 nm to 3 nm.

Further, the average area of the nano sodium/potassium titanate thin-film with in-situ doped E element exceeds 500 nm².

Further, the average area of the nano sodium/potassium titanate thin-film with in-situ doped E element exceeds 1000 nm².

Further, the average area of the nano sodium/potassium titanate thin-film with in-situ doped E element exceeds 10000 nm².

Further, the nano sodium/potassium titanate thin-film with in-situ doped E element exhibit low crystallinity.

Further, when the initial alloy undergoes a hydrogen evolution and T removal reaction with an alkaline solution primarily composed of NaOH/KOH, an intermediate powder product is obtained. This product mainly consists of nano sodium/potassium titanate thin-film with in-situ doped E element.

The nano sodium/potassium titanate thin-film powder appears as a powder at the macroscopic level. However, at the microscopic level, it is composed of a large number of nano thin-films.

(2) Under atmospheric pressure, when the NaOH/KOH concentration is low and the alkaline solution temperature is low, the intermediate powder product mainly comprises irregular nanoporous sodium/potassium titanate powder with in-situ doped E element;

Preferably, by controlling the NaOH/KOH concentration and temperature, if the reaction interface advances inward from the surface of the initial alloy at an average rate of less than 2 µm/min, the intermediate powder product mainly consists of irregular nanoporous sodium/potassium titanate powder with in-situ doped E element;

As an optimization, when the NaOH/KOH concentration ranges from 2.1 to 15 mol/L and the temperature is below 60°C, the intermediate powder product mainly consists of irregular nanoporous sodium/potassium titanate powder with in-situ doped E element;

The irregular powder refers to powder particles that undergo initial fragmentation due to the hydrogen gas evolution from the reaction of the initial alloy. Since this fragmentation occurs randomly without a specific pattern, the resulting particle sizes and shapes vary, forming irregular powder.

If the volume of the irregular powder particles is approximated as near-spherical particles, then:

Further, the D₉₀ particle size of the irregular nanoporous sodium/potassium titanate powder with in-situ doped E element is greater than 500 nm.

Further, the D₉₀ particle size of the irregular nanoporous sodium/potassium titanate powder with in-situ doped E element is greater than 1 µm.

Further, the D₉₀ particle size of the irregular nanoporous sodium/potassium titanate powder with in-situ doped E element is greater than 3 µm.

Further, the average diameter of the ligament in the microscopic structure of the sodium/potassium titanate in the irregular nanoporous sodium/potassium titanate powder with in-situ doped E element is less than 10 nm.

Further, the average diameter of the ligament in the microscopic structure of the sodium/potassium titanate in the irregular nanoporous sodium/potassium titanate powder with in-situ doped E element is less than 5 nm.

Further, the average diameter of the ligament in the microscopic structure of the sodium/potassium titanate in the irregular nanoporous sodium/potassium titanate powder with in-situ doped E element is less than 3 nm.

Further, the irregular nanoporous sodium/potassium titanate powder with in-situ doped E element is primarily low-crystalline.

(3) Under atmospheric pressure, when the NaOH/KOH concentration is moderate and the alkaline solution temperature is moderate, the intermediate powder product mainly comprises irregular nanoporous sodium/potassium titanate powder with in-situ doped E element and nano sodium/potassium titanate thin-film powder with in-situ doped E element;

Preferably, by controlling the NaOH/KOH concentration and temperature, during the reaction process between the initial alloy and an alkaline solution primarily composed of NaOH/KOH, if the reaction interface advances inward from the surface of the initial alloy at an average rate of 2 µm/min to 10 µm/min, the intermediate powder product mainly consists of irregular nanoporous sodium/potassium titanate powder with in-situ doped E element and nano sodium/potassium titanate thin-film powder with in-situ doped E element;

Furthermore, when the NaOH/KOH concentration ranges from 2.1 to 15 mol/L and the alkaline solution temperature is between 60°C and 100°C, the intermediate powder product primarily consists of irregular nanoporous sodium/potassium titanate powder with in-situ doped E element and nano sodium/potassium titanate thin-film powder with in-situ doped E element;

Further, the irregular nanoporous sodium/potassium titanate powder with in-situ doped E element and the nano sodium/potassium titanate thin-film powder with in-situ doped E element are primarily low-crystalline.

In the aforementioned points 1) to 3), the reaction time for the complete removal of T elements from the initial alloy is related to the shape of the initial alloy: When the initial alloy powder particles are smaller or the initial alloy ribbons are thinner, the time required for the hydrogen evolution and T removal reaction to complete is shorter; conversely, the time required for the reaction to complete is longer. Based on the average advance rate of the reaction interface and the size of the initial alloy, the minimum reaction time *t* required for the completion of the hydrogen evolution and T removal reaction can be calculated. For example, when the initial alloy is in the form of a ribbon with thickness d, and the average advance rate of the reaction interface is v, considering that the reaction interface advances from both the upper and lower surfaces of the ribbon, the reaction time is *t=0.5d*/*v.* Similarly, when the initial alloy is in the form of a particle with diameter d, and the average advance rate of the reaction interface is v, the reaction time is also *t*=0.5*d*/*v.*

When the NaOH concentration is 10 mol/L, the hydrogen evolution and T removal reaction interface during the reaction between the initial alloy and the alkali solution advances inward at the following average rates:
When 60°C ≤ *T*₁ ≤ 80°C, the average advance rate of the reaction interface is approximately 2 µm/min to 7 µm/min.

When 80°C ≤ *T*₁ ≤ 90°C, the average advance rate of the reaction interface is approximately 7 µm/min to 15 µm/min.

When 90°C < *T*₁ ≤ 100°C, the average advance rate of the reaction interface is approximately 15 µm/min to 30 µm/min.

When 100°C < *T*₁ ≤ 110°C, the average advance rate of the reaction interface is approximately 30 µm/min to 50 µm/min.

When 110°C < *T*₁ < 119°C, the average advance rate of the reaction interface is approximately 50 µm/min to 120 µm/min.

If the average advance rate of the reaction interface for the initial alloy ribbon is approximately ~120 µm/min (under the boiling point temperature *T*_{*f*(solution)} of the NaOH solution with a concentration of 10 mol/L), for a 40 µm thick initial alloy ribbon, the Al removal reaction can be completed in 10 seconds; For a 20 µm thick initial alloy ribbon, the Al removal reaction can be completed in 5 seconds; Even for an initial alloy sphere with a 5 mm diameter, the Al removal reaction can be completed in 21 minutes.

Further, the reaction time between the initial alloy and the alkali solution is 10 s ~ 59 mins.

Further, the reaction time between the initial alloy and the alkali solution is 10 s ~ 9.9 mins.

Further, the reaction time between the initial alloy and the alkali solution is 10 s ~ 2 mins.

Further, the reaction time between the initial alloy and the alkali solution is 10 s ~ 1 min.

Further, the reaction time between the initial alloy and the alkali solution is 10 s ~ 30 s.

Clearly, as the temperature *T*₁ increases, or the initial alloy thickness becomes thinner or the particle size becomes smaller, the required reaction time is shorter. Conversely, when the alloy is thicker or the particle size is larger, the reaction time is longer.

Once the hydrogen evolution and T removal reaction is completed, the system reaches equilibrium. After that, even if the reaction time is extended at the original reaction temperature, the intermediate product will still remain stable. Therefore, when the reaction time between the initial alloy and the alkali solution exceeds the minimum required T removal reaction time *t*, even if it lasts for several hours, the corresponding intermediate product can still be obtained.

(4) When the reaction takes place in a closed container above atmospheric pressure with a higher concentration of NaOH/KOH, and the temperature is higher than the boiling point (*T*_{*f*(solution)}) of the solution at one atmosphere, the intermediate powder product mainly comprises nano sodium/potassium titanate tubes (or/and rods) with in-situ doped E element;

Further, the reaction temperature is higher than *T*_{*f*(solution)} temperature but lower than 300°C; Further, the reaction temperature is higher than *T*_{*f*(solution)} temperature, but lower than 250°C; Further, the reaction temperature is higher than *T*_{*f*(solution)} temperature, but lower than 200°C.

Further, the reaction time is 1 minute to 5 hours; Further, the reaction time is 1 minute to 2 hours; Further, the reaction time is 1 minute to 30 minutes.

Preferably, when the NaOH/KOH concentration ranges from 7.5 to 30 mol/L, and the reaction temperature is higher than the *T*_{*f*(solution)}, the gas pressure corresponds to the pressure in the closed container at the given temperature. The intermediate powder product mainly consists of nano sodium/potassium titanate tubes (or/and rods) with in-situ doped E element;

Further, the outer diameter of the nano sodium/potassium titanate tubes (or/and rods) with in-situ doped E element is no more than 10 nm.

Further, the outer diameter of the nano sodium/potassium titanate tubes (or/and rods) with in-situ doped E element is no more than 7.5 nm.

Further, the nano sodium/potassium titanate tubes (or/and rods) with in-situ doped E element are mainly crystalline.
5) The intermediate powder product composed of nano sodium/potassium titanate with in-situ doped E element in various shapes as described in sections (1)-(4) is reacted with dilute acid to obtain the hydrogen ion-exchanged nano titanic acid intermediate powder product with in-situ doped E element; its composition mainly includes at least one of the following: nano titanic acid thin film powder with in-situ doped E element, irregular nanoporous titanic acid powder with in-situ doped E element, nano titanic acid tubes (or/and rods) with in-situ doped E element;

Further, the hydrogen ion concentration in the acid solution is 0.001 mol/L to 0.2 mol/L.

Preferably, the hydrogen ion concentration in the acid solution is 0.001 mol/L to 0.1 mol/L.

Preferably, the hydrogen ion concentration in the acid solution is 0.001 mol/L to 0.05 mol/L.

Further, apart from the cation exchange from sodium/potassium ions to hydrogen ions, the morphological characteristics of the nano titanic acid thin film powder with in-situ doped E element are essentially the same as those of the nano sodium/potassium titanate thin film powder with in-situ doped E element; the morphological characteristics of the irregular nanoporous titanic acid powder with in-situ doped E element are essentially the same as those of the irregular nanoporous sodium/potassium titanate powder with in-situ doped E element; the morphological characteristics of the nano titanic acid tubes (or/and rods) with in-situ doped E element are essentially the same as those of the nano sodium/potassium titanate tubes (or/and rods) with in-situ doped E element. Specific features are as described above.

Specifically, during the reaction between the initial alloy and the alkaline solution composed mainly of NaOH/KOH, or during the reaction processes described in (1)-(5), the E element initially exists in the form of E atoms either as a solid solution within the T-Ti(E) intermetallic compound or as dispersed E atoms within the T-Ti-E intermetallic compound. Before and after reacting with the NaOH/KOH solution, the T-Ti(E) intermetallic compound or T-Ti-E intermetallic compound remains in a solid state. Consequently, E element atoms cannot be easily expelled during the reaction, leading to in-situ endogenous doping of the E element in the intermediate powder product. Depending on the reaction conditions, different morphologies of in-situ endogenous doped sodium/potassium titanate or titanic acid intermediate powder products are obtained.

Further, the dominant doping methods of the in-situ doped E element mainly include at least one of the following two methods:
a) the E element is in-situ endogenously embedded in the sodium/potassium titanate or titanic acid intermediate powder product in the form of E nanoparticles or oxidized E nanoparticles, and the E nanoparticles or oxidized E nanoparticles exist as a heterogeneous phase relative to the sodium/potassium titanate or titanic acid matrix.
b) the E element is in-situ endogenously embedded in the sodium/potassium titanate or titanic acid intermediate powder product in the form of E atoms or atomic clusters, and the E atoms or atomic clusters do not exist as a heterogeneous phase relative to the sodium/potassium titanate or titanic acid matrix, or the E atoms or atomic clusters do not exist as a distinct heterogeneous phase relative to the sodium/potassium titanate or titanic acid matrix.

The size of the E atomic clusters does not exceed 2 nm and is difficult to distinguish in TEM (Transmission Electron Microscopy) due to contrast limitations. In this scenario, the E element is present in the sodium/potassium titanate or titanic acid intermediate powder product as a solid solution of E atoms or atomic clusters. This in-situ endogenous doping via solid solution includes at least one of the following mechanisms: interstitial solid solution and substitutional solid solution. Further, this solid solution-based in-situ endogenous doping primarily occurs through substitutional solid solution, meaning the doped E atoms replace certain atoms within the lattice of the sodium/potassium titanate or titanic acid crystal structure.

The term in-situ endogenous embedding or in-situ endogenous incorporation refers to the process where E nanoparticles or E oxide nanoparticles are embedded within the sodium/potassium titanate or titanic acid matrix through an in-situ growth mechanism. This means the E nanoparticles or E oxide nanoparticles become embedded as they are partially or fully encapsulated by the sodium/potassium titanate or titanic acid matrix during formation. This embedding occurs without the need for external addition or external mixing of E nanoparticles. Once embedded, the E nanoparticles or E oxide nanoparticles cannot move freely within the sodium/potassium titanate or titanic acid matrix and do not easily detach. This in-situ endogenous embedding takes place simultaneously with the formation of sodium/potassium titanate or titanic acid during the hydrogen evolution and T removal reaction, leading to their co-formation and co-embedding.

The same principle applies when the E element is incorporated in the form of E atoms or atomic clusters within the sodium/potassium titanate or titanic acid intermediate powder product through in-situ endogenous embedding.

Generally, the fundamental mechanism of E element in-situ endogenous doping depends on the solubility of the E element in the sodium/potassium titanate or titanic acid matrix. When the E element has a high solubility in the sodium/potassium titanate or titanic acid matrix, it primarily undergoes in-situ endogenous embedded doping in the form of E atoms or atomic clusters. When the E element has a low solubility, it primarily undergoes in-situ endogenous embedded doping in the form of E nanoparticles or E oxide nanoparticles.

Additionally, the fundamental mode of in-situ endogenous doping of E elements is also related to *C*_{E}/*C*_{Ti}. For the same E element, when *C*_{E}/*C*_{Ti} is at a low value, the element primarily exists as E atoms or atomic clusters through in-situ endogenous embedding and doping. When *C*_{E}/*C*_{Ti} is at a higher value, the element primarily exists as E nanoparticles or oxidized E nanoparticles through in-situ endogenous embedding and doping.

Further, when the E element primarily includes at least one of Au, Pt, Pd, Ru, Rh, Re, Os, or Ir:
For 0.03 < *C*_{E}/*C*_{Ti} ≤ 0.30, the E element primarily exists as E nanoparticles in an in-situ embedded manner in sodium/potassium titanate or titanic acid intermediate powder products, with a particle size of 2 nm to 20 nm.

For 0.01 < *C*_{E}/*C*_{Ti} ≤ 0.03, the E element exists both as E nanoparticles and as E atoms or atomic clusters in an in-situ embedded manner in sodium/potassium titanate intermediate powder products.

For 0 < *C*_{E}/*C*_{Ti} ≤ 0.01, the E element primarily exists as E atoms or atomic clusters in an in-situ endogenous doping manner in sodium/potassium titanate or titanic acid intermediate powder products.

Further, when the E element primarily includes at least one of Cu, Fe, Ni, or Co, and:
For 0.05 < *C*_{E}/*C*_{Ti} ≤ 0.30, the E element primarily exists as E nanoparticles or oxidized E nanoparticles in an in-situ embedded manner in sodium/potassium titanate or titanic acid intermediate powder products, with a particle size of 2 nm to 20 nm.

For 0.02 < *C*_{E}/*C*_{Ti} ≤ 0.05, the E element exists both as E nanoparticles or oxidized E nanoparticles and as E atoms or atomic clusters in an in-situ embedded manner in sodium/potassium titanate or titanic acid intermediate powder products.

For 0 < *C*_{E}/*C*_{Ti} ≤ 0.02, the E element primarily exists as E atoms or atomic clusters in an in-situ endogenous doping manner in sodium/potassium titanate or titanic acid intermediate powder products.

Furthermore, when the E element primarily includes Ag, and:
For 0.20 < *C*_{E}/*C*_{Ti} ≤ 0.30, the E element primarily exists as E nanoparticles in an in-situ embedded manner in sodium/potassium titanate or titanic acid intermediate powder products, with a particle size of 2 nm to 20 nm.

For 0.10 < *C*_{E}/*C*_{Ti} ≤ 0.20, the E element exists both as E nanoparticles and as E atoms or atomic clusters in an in-situ embedded manner in sodium/potassium titanate or titanic acid intermediate powder products.

For 0 < *C*_{E}/*C*_{Ti} ≤ 0.10, the E element primarily exists as E atoms or atomic clusters in an in-situ endogenous doping manner in sodium/potassium titanate or titanic acid intermediate powder products.

Further, when the E element primarily includes at least one of Zr or Hf, and:
For 0 < *C*_{E}/*C*_{Ti} ≤ 0.30, the E element primarily exists as E atoms or atomic clusters in an in-situ endogenous doping manner in sodium/potassium titanate or titanic acid intermediate powder products.

Preferably, for 0 < *C*_{E}/*C*_{Ti} ≤ 0.10, the E element primarily exists as E atoms or atomic clusters in an in-situ endogenous doping manner in sodium/potassium titanate or titanic acid intermediate powder products.

Since Ti, Zr, and Hf are in the same group in the periodic table and have similar properties, Zr and Hf can be doped in larger amounts into sodium/potassium titanate or titanic acid.

Furthermore, when the E element primarily includes at least one of Cr, V, Nb, Ta, W, Mo, and:
For 0.20 < *C*_{E}/*C*_{Ti} ≤ 0.30, the E element exists both as E nanoparticles or E oxide nanoparticles and as E atoms or atomic clusters in an in-situ embedded manner in sodium/potassium titanate or titanic acid intermediate powder products.

For 0 < *C*_{E}/*C*_{Ti} ≤ 0.20, the E element primarily exists as E atoms or atomic clusters in an in-situ endogenous doping manner in sodium/potassium titanate or titanic acid intermediate powder products.

Preferably, for 0 < *C*_{E}/*C*_{Ti} ≤ 0.10, the E element primarily exists as E atoms or atomic clusters in an in-situ endogenous doping manner in sodium/potassium titanate or titanic acid intermediate powder products.

Since Ti and Cr, V, Nb, Ta, W, Mo share similar properties, these elements can be doped in larger amounts into sodium/potassium titanate or titanic acid.

Further, when the E element primarily includes at least one of Mn, Sn, Pb, Bi, B, Be, or RE, and:
For 0.10 < *C*_{E}/*C*_{Ti} ≤ 0.30, the E element primarily exists as E nanoparticles or E oxide nanoparticles in an in-situ embedded manner in sodium/potassium titanate or titanic acid intermediate powder products, with a nanoparticle size range of 2 nm to 20 nm.

For 0.06 < *C*_{E}/*C*_{Ti} ≤ 0.10, the E element exists both as E nanoparticles or E oxide nanoparticles and as E atoms or atomic clusters in an in-situ embedded manner in sodium/potassium titanate or titanic acid intermediate powder products.

For 0 < *C*_{E}/*C*_{Ti} ≤ 0.06, the E element primarily exists as E atoms or atomic clusters in an in-situ endogenous doping manner in sodium/potassium titanate or titanic acid intermediate powder products.

Preferably, for 0 < *C*_{E}/*C*_{Ti} ≤ 0.03, the E element primarily exists as E atoms or atomic clusters in an in-situ endogenous doping manner in sodium/potassium titanate or titanic acid intermediate powder products.

### Explanation:

The term sodium/potassium titanate refers to "sodium titanate or (and) potassium titanate" and can also be expressed as "at least one of sodium titanate and potassium titanate." It can also refer to potassium solid solution in sodium (potassium) titanate or sodium solid solution in potassium (sodium) titanate.

The term NaOH/KOH refers to NaOH or (and) KOH, and can also be expressed as "at least one of NaOH and KOH."

In step three:
Ba²⁺/Li⁺ refers to " Ba²⁺ or (and) Li⁺" and can also be expressed as "at least one of Ba²⁺ and Li⁺."
The barium/lithium source material containing Ba²⁺/Li⁺ includes at least one of Ba²⁺/Li⁺-containing alkalis and Ba²⁺/Li⁺-containing salts;

Further, the Ba²⁺/Li⁺-containing alkalies include at least one of Ba(OH)₂ or LiOH.

Further, the Ba²⁺/Li⁺-containing alkali mainly contains Ba²⁺ and is primarily composed of Ba(OH)₂.

Further, the Ba²⁺/Li⁺-containing alkali mainly contains Li⁺ and is primarily composed of LiOH.

Further, the Ba²⁺/Li⁺-containing salts include at least one of water-soluble BaCl₂, LiCl, Ba(NO₃)₂, LiNO₃, and Li₂SO₄.

Further, the Ba²⁺/Li⁺-containing salts include at least one of sparingly soluble Li₃PO₄, Ba₃(PO₄)₂, Li₂CO₃, BaCO₃, BaSO₄, and BaS.

Further, when the medium is in solution form, the Ba²⁺/Li⁺-containing Ba/Li source materials are mainly water-soluble salts or alkalis, containing at least one of Ba(OH)₂, LiOH, BaCl₂, LiCl, Ba(NO₃)₂, LiNO₃, and Li₂SO₄.

Further, when the medium is in solution form, the Ba²⁺/Li⁺-containing Ba/Li source materials are mainly at least one of water-soluble Ba(OH)₂ and LiOH.

Further, when the reaction medium is non-aqueous, the step 3 specifically involves uniformly mixing the intermediate powder product described in step 2 with barium/lithium source material containing Ba²⁺/Li⁺ by ball milling and (or) sand milling, followed by a solid-phase reaction, and the ratio of the molar content of Ba²⁺/Li⁺ to the molar content of Ti in the intermediate powder product in the reaction system ranges from 0.75:1 to 1.25:1; and after the reaction, ball milling or sand milling is performed to crush and disperse the product, resulting in the nano barium/lithium titanate powder products with in-situ doped E element.
Further, when the reaction medium is non-aqueous, the Ba²⁺/Li⁺-containing Ba/Li source material primarily comprising at least one of sparingly soluble Li₃PO₄, Ba₃(PO₄)₂, Li₂CO₃, BaCO₃, BaSO₄, and BaS;
Further, when the reaction medium is non-aqueous, the Ba²⁺/Li⁺-containing Ba/Li source material primarily comprising at least one of sparingly soluble Li₃PO₄, Ba₃(PO₄)₂, Li₂CO₃, BaCO₃, BaSO₄, and BaS;
Further, when the reaction medium is non-aqueous, the Ba²⁺/Li⁺-containing Ba/Li source material mainly comprising at least one of sparingly soluble Li₂CO₃ and BaCO₃;

Further, when the reaction medium is non-aqueous, the temperature for the solid-phase reaction ranges from 400°C to 1500°C.

Further, when the reaction medium is non-aqueous, the temperature for the solid-phase reaction ranges from 400°C to 1300°C.

Further, when the reaction medium is non-aqueous, the temperature for the solid-phase reaction ranges from 600°C to 1000°C.

Further, when the reaction medium is aqueous, the morphology change to "spherization" and cation exchange reaction of the non-spherical intermediate powder product with water-soluble Ba²⁺/Li⁺ salts or alkalis is mainly manifested as follows:
During the reaction, the sodium/potassium titanate or titanic acid is replaced by barium/lithium titanate.

During the reaction, the shape of the nano sodium/potassium titanate or titanic acid thin-film powder intermediate product undergoes "spherization", changing into spherical or near-spherical particles with an average particle size ranging from 5nm to 300nm.

During the reaction, the shape of the irregular nanoporous sodium/potassium titanate or titanic acid powder intermediate product undergoes "spherization", changing into spherical or near-spherical particles with an average particle size ranging from 5nm to 300nm.

During the reaction, the shape of the nano sodium/potassium titanate tube (rod) or titanic acid tube (rod) powder intermediate product changes from a tube (rod) shape to "spherization" , changing into spherical or near-spherical particles with an average particle size ranging from 5nm to 300nm.

During the reaction, the in-situ doped E element in the intermediate powder product remains in the in-situ doped state.

During the reaction, the replacement of sodium/potassium titanate or titanic acid with barium/lithium titanate occurs no later than the morphology change of the non-spherical intermediate powder product into "spherization." In other words, the replacement reaction and the "spherization" process start simultaneously, but the replacement reaction can be completed first, while the spherization morphology change of the non-spherical intermediate powder product continues after the replacement reaction is complete.

Further, the spherical or near-spherical particles include at least one of solid spherical particles, near-spherical solid particles, non-solid spherical particles, and non-solid near-spherical particles.

Further, the non-solid spherical particles or near-spherical particles include at least one of hollow spherical particles, hollow near-spherical particles, partially hollow spherical particles and partially hollow near-spherical particles;

Further, the hollow spherical or near-spherical particles include hollow spherical shell particles.

Further, the partially hollow spherical or near-spherical particles include defective hollow spherical shell particles.

Further, the shell wall thickness of the hollow or partially hollow spherical shell particles is between 3nm and 10nm.

Further, the minimum sintering film formation temperature of the spherical or near-spherical nano barium/lithium titanate particle powder product with in-situ doped E element does not exceed 950°C.

Further, the minimum sintering film formation temperature of the spherical or near-spherical nano barium/lithium titanate particle powder product with in-situ doped E element does not exceed 850°C.

Additionally, when the type and content of the E element in the in-situ doped nano sodium/potassium titanate or titanic acid vary, they will also affect the "spherization" process of the non-spherical intermediate powder product. Generally speaking, the presence of doped E elements will somewhat hinder the "spherization" process, and the higher the content of E elements, the more significant the effect.

In the reaction system, the conditions for the "spherization" and cation exchange reaction of the non-spherical intermediate powder product are as follows:
the reaction medium is primarily a solution-based medium, with pressure at atmospheric pressure or higher than atmospheric pressure; the barium/lithium source material mainly consists of water-soluble salts or alkalis containing Ba²⁺/Li⁺, and the reaction temperature is 30°C-*T*_{*f*(solution medium)}, with a reaction time greater than 5 seconds. Here, *T*_{*f*(solution medium)} is the boiling point temperature of the solution medium under atmospheric pressure, and the value of *T*_{*f*(solution medium)} depends on the type and concentration of the water-soluble salts or alkalis containing Ba²⁺/Li⁺, generally ranging from 100°C to 150°C.

Further, the pressure is atmospheric pressure, meaning the reaction is carried out in an open container.

Further, the barium/lithium source material includes at least one of Ba(OH)₂, LiOH, BaCl₂, LiCl, Ba(NO₃)₂, LiNO₃ and Li₂SO₄.

Further, the barium/lithium source material includes at least one of Ba(OH)₂ and LiOH.

Further, in the reaction system, the molar ratio of Ba²⁺/Li⁺ content (*C*_{Ba/Li}) in the aqueous solution to the Ti content (*C*_{Ti}) in the nano sodium/potassium titanate or titanic acid powder satisfies 0.8 ≤*C*_{Ba/Li}/*C*_{Ti}.

Further, 1 ≤ *C*_{Ba/Li}/*C*_{Ti}. Further, 1 ≤ *C*_{Ba/Li}/*C*_{Ti} ≤ 10.

Further, the reaction temperature is 50°*C*-*T*_{*f*(solution medium)}.

Further, the reaction temperature is 80°C-*T*_{*f*(solution medium)}. Further, the reaction temperature is 100°C-*T*_{*f*(solution} medium)..

Further, the reaction time is 10s-10h.

Further, the reaction time is 10s-1h.

Further, when the reaction temperature is at *T*_{*f*(solution medium)}, the reaction time is 10s-15min.

Further, when the reaction temperature is at *T*_{*f*(solution medium)}, the reaction time is 10s-5min.

Further, when the reaction temperature is at *T*_{*f*(solution medium)}, the reaction time is 10s-2min.

As a preferred option, when the reaction system contains NaOH/KOH components in the aqueous solution, the reaction effect is enhanced; at this point, NaOH/KOH acts as a catalyst.

As a preferred option, the total concentration of NaOH/KOH in the aqueous solution is 0.001mol/L-25mol/L.

As a preferred option, the total concentration of NaOH/KOH in the aqueous solution is 0.001mol/L-1mol/L.

Further, when subsequent dry heat treatment is required to further promote the degree of spherization, the temperature of the subsequent dry heat treatment is between 150°C and 1300°C.

Further, when subsequent dry heat treatment is required to further promote the degree of spherization, the temperature of the subsequent dry heat treatment is between 150°C and 1000°C.

In the reaction process, the nano sodium/potassium titanate is replaced by nano barium/lithium titanate; or the nano titanic acid is replaced by nano barium/lithium titanate.

When the non-spherical intermediate powder product mainly consists of nano sodium/potassium titanate or titanic acid thin film powder intermediate products with in-situ doped E element, its primary "spherization" process and mechanism are as follows:
In the reaction system solution, when the nano sodium/potassium titanate or titanic acid thin film with in-situ doped E element is a single free film, the nano sodium/potassium titanate or titanic acid is replaced by nano barium/lithium titanate. At the same time and afterwards, the thin film undergoes a spherization contraction process, transforming into a single spherical or near-spherical particle. When the primary "spherization" is incomplete, the result of the thin film contraction is a non-solid spherical or near-spherical shell-like particle, with an outer diameter in the range of 5 nm-150 nm. When the "spherization" is complete, depending on the size of the original film, the non-solid spherical or near-spherical shell-like particles further aggregate into nearly solid spherical or near-spherical particles, with a particle size range of 2 nm-30 nm. Further, the particle size range is 2 nm-20 nm.

Therefore, for a single free nano sodium/potassium titanate or titanate thin film, its spherization process can be roughly summarized as: film-like → non-solid spherical shell-like → solid spherical.

Further, the spherical or near-spherical particles include at least one of solid spherical particles, near-spherical solid particles, non solid spherical particles, and non-solid near-spherical particles.

Further, the non-solid spherical particles or near-spherical particles include at least one of hollow spherical particles, hollow near-spherical particles, partially hollow spherical particles and partially hollow near-spherical particles;

Further, the shell wall thickness of the non-solid spherical or near-spherical shell-like particles is in the range of 2 nm-10 nm.

In the reaction system solution, when the nano sodium/potassium titanate or titanic acid thin film with in-situ doped E element forms an entangled agglomerate, the spherization contraction process of a single film is interfered by the spherization contraction process of other entangled films. As a result, the free spherization process of "film-like → non-solid spherical shell-like → solid spherical" is limited. Multiple adjacent films merge and contract into larger non-free "spherized" units. These multiple or many non-free "spherized" units further aggregate into larger agglomerates with a strength of binding between soft and hard aggregation. These agglomerates exhibit nano-porous structural characteristics, and the non-free "spherized" units resemble the ligaments within the nano-porous structure.

When the non-spherical intermediate powder product mainly consists of irregular nanoporous sodium/potassium titanate or titanic acid powder intermediate products with in-situ doped E element, its primary "spherization" process and mechanism are as follows:
Although the irregular nanoporous sodium/potassium titanate or titanic acid powder intermediate products with in-situ doped E element are generally large, their internal structure is a three-dimensional continuous network of nanoporous structures. The ligament diameter in the microstructure of nanoporous sodium/potassium titanate or titanic acid is typically below 10 nm, sometimes even below 5 nm, resulting in an extremely high specific surface area. Therefore, during the replacement of the nanoporous ligaments in the irregular nanoporous sodium/potassium titanate or titanic acid powder intermediate products by nano barium/lithium titanate, a significant contraction-induced "spherization" process occurs. Multiple adjacent nanoporous ligaments contract and spherize to form larger non-free "spherized" nano barium/lithium titanate units. These multiple or numerous non-free "spherized" units further aggregate into larger agglomerates with a binding strength between soft and hard aggregation. The agglomerates exhibit nanoporous structural characteristics, where the non-free "spherized" units resemble the ligaments within a nanoporous structure.

When the non-spherical intermediate powder product mainly consists of nano sodium/potassium titanate or titanic acid tube (rod) intermediate products with in-situ doped E element, its primary "spherization" process and mechanism are as follows:
In the reaction system solution, when the nano sodium/potassium titanate or titanic acid tube (rod) intermediate products with in-situ doped E element exists as a single free-standing tube (rod), it undergoes a spherization contraction process simultaneously with or after being replaced by nano barium/lithium titanate, transforming into a single spherical or near-spherical particle. Due to the limited size and volume of the original individual tube (rod), the particle size of the resulting single spherical or near-spherical particle generally does not exceed 30 nm. Further, depending on the original size of the tube (rod), the particle size range of the resulting single spherical or near-spherical particle is 3 nm-30 nm, and more specifically, 3 nm-20 nm.

In the reaction system solution, when the nano sodium/potassium titanate or titanic acid tube (rod) intermediate products with in-situ doped E element are entangled and aggregated together, the spherization contraction process of individual tubes (or/and rods) is influenced by the spherization contraction processes of other entangled tubes (or/and rods). This causes multiple adjacent tubes (or/and rods) to merge and contract into larger non-free "spherized" nano barium/lithium titanate units. Multiple or numerous non-free "spherized" units further aggregate into larger agglomerates with a binding strength between soft and hard aggregation. These agglomerates exhibit nanoporous structural characteristics, where the non-free "spherized" units resemble the ligaments within a nanoporous structure.

For the primary "spherization" process and mechanism of the three different types of non-spherical intermediate powder products:
Further, the composition of the non-free "spherized" unit is primarily nano barium/lithium titanate with in-situ doped E element;
Further, the shape of the nano barium/lithium titanate non-free "spherized" unit is between a non-fully solid sphere and a short rod. This is because, during the formation of the nano barium/lithium titanate non-free "spherized" unit, the entanglement of different thin films or tubes (or/and rods) affects its sphericity, resulting in a shape between a sphere and a short rod.

Further, the nano barium/lithium titanate non-free "spherized" unit is in a metastable state.

Further, the average diameter range of the nano barium/lithium titanate non-free "spherized" unit with in-situ doped E element is 5 nm-300 nm.

Further, the average diameter range of the nano barium/lithium titanate non-free "spherized" unit with in-situ doped E element is 5 nm-250 nm.

Further, the average diameter range of the nano barium/lithium titanate non-free "spherized" unit with in-situ doped E element is 5 nm-200 nm.

Further, the average diameter range of the in-situ doped E element nano barium/lithium titanate non-free "spherized" unit is 5 nm-100 nm.

Further, the average particle size range of the agglomerates is 50 nm-5 µm. Further, the average particle size range of the agglomerates is 50 nm-2 µm. Further, the average particle size range of the agglomerates is 50 nm-1 µm.

Further, the agglomerates can be dispersed through mechanical crushing and dispersion treatment to obtain nano barium/lithium titanate spherical or near-spherical powder products in-situ doped E element, with the original nano barium/lithium titanate non-free "spherized" unit as the basic particle unit.

Further, the minimum sintering film formation temperature of the nano barium/lithium titanate spherical or near-spherical powder product with in-situ doped E element, with the original nano barium/lithium titanate non-free "spherized" unit as the basic particle unit, does not exceed 950°C.

Further, the minimum sintering film formation temperature of the nano barium/lithium titanate spherical or near-spherical powder product with in-situ doped E element, with the original nano barium/lithium titanate non-free "spherized" unit as the basic particle unit, does not exceed 850°C.

Since the nano barium/lithium titanate non-free "spherized" units are small in size and mostly not fully solidified into spheres, their specific surface area remains high. Additionally, their metastable nature results in high energy, allowing for local particle melting and film formation at a relatively low sintering temperature.

During the cation substitution reaction, the three typical non-spherical intermediate powder products undergo primary "spherization." However, if the cation substitution reaction is completed but the primary "spherization" remains insufficient, the degree of spherization can be further enhanced by increasing the solution temperature/pressure, or raising the concentration of NaOH/KOH in the solution, or extending the reaction time, or performing additional dry heat treatment on the primary "spherized" product. By applying these methods, a more fully spherized spherical or near-spherical nano barium/lithium titanate particle powder product with in-situ doped E element can be obtained.

Further, if the primary "spherization" in step 3 remains insufficient, the degree of spherization can be improved using at least one of the following three methods:
(1) Placing the reaction system in a sealed container and subjecting it to high temperature and pressure for a period of time, which can further shrink the non-free "spherized" units into spherical or near-spherical nano barium/lithium titanate particles with in-situ doped E element and higher degree of solidity; The treatment temperature ranges from 150°C to 300°C, with the pressure corresponding to the internal pressure of the sealed container at that temperature.
(2) Continuously evaporating the solution in the reaction system until dry, then heating the residual solid matter in the same reaction container to 150°C-400°C and maintaining that temperature for a period of time. This process helps the non-free "spherized" units' further shrink into more solid spherical or near-spherical nano barium/lithium titanate particles with in-situ doped E element;
(3) Collecting the solid matter from the reaction system and heating it to 150°C-1300°C, maintaining the temperature for a period of time. High-temperature processing, particularly in the 600°C-1300°C range, causes the non-free "spherized" units to shrink into highly solid spherical or near-spherical nano barium/lithium titanate particles. However, at this high-temperature range (600°C-1300°C), once the particles become almost completely solid, further heating may lead to sintering and agglomeration. Therefore, careful control of heat treatment temperature and duration is required to obtain spherical or near-spherical nano barium/lithium titanate particles with in-situ doped E element without significant sintering or agglomeration.

Further, after the above treatments, mechanical crushing and dispersion can be used to further break apart and disperse the spherical or near-spherical nano barium/lithium titanate particles, ultimately obtaining fully solidified spherical or near-spherical powder products with in-situ doped E element;

Further, during the transformation of the nano sodium/potassium titanate or titanic aicd matrix with in-situ doped E element into a barium/lithium titanate matrix via reaction, the E elements remain within the solid phase before and after the reaction, and the E elements cannot be excluded. As a result, the E elements continue to be in-situ doped within the newly formed nano barium/lithium titanate matrix, yielding nano barium/lithium titanate particles with in-situ doped E element.

Further, when the E elements primarily include at least one of Au, Pt, Pd, Ru, Rh, Re, Os, or Ir, and:
For 0.03 < *C*_{E}/*C*_{Ti} ≤ 0.30, the E elements mainly exist as E nanoparticles embedded in the barium/lithium titanate powder product. And the size of these E nanoparticles ranges from 2 nm to 20 nm.

For 0.01 < *C*_{E}/*C*_{Ti} ≤ 0.03, the E elements exist in a dual form as E nanoparticles and as E atoms or atomic clusters embedded within the barium/lithium titanate powder.

For 0 < *C*_{E}/*C*_{Ti} ≤ 0.01, the E elements mainly exist as E atoms or atomic clusters in the barium/lithium titanate powder.

Furthermore, when the E elements primarily include at least one of Cu, Fe, Ni, or Co, and:
For 0.05 < *C*_{E}/*C*_{Ti} ≤ 0.30, the E elements mainly exist as E nanoparticles or oxide E nanoparticles embedded in the barium/lithium titanate powder. And the size of these E nanoparticles ranges from 2 nm to 20 nm.

For 0.02 < *C*_{E}/*C*_{Ti} ≤ 0.05, the E elements exist in a dual form as E nanoparticles or oxide E nanoparticles and as E atoms or atomic clusters embedded within the barium/lithium titanate powder.

For 0 < *C*_{E}/*C*_{Ti} ≤ 0.02, the E elements mainly exist as E atoms or atomic clusters in the barium/lithium titanate powder.

Further, when the E element primarily includes Ag, and:
For 0.20 < *C*_{E}/*C*_{Ti} ≤ 0.30, the Ag elements mainly exist as Ag nanoparticles embedded in the barium/lithium titanate powder. And the size of these Ag nanoparticles ranges from 2 nm to 20 nm.

For 0.10 < *C*_{E}/*C*_{Ti} ≤ 0.20, the Ag elements exist in a dual form as Ag nanoparticles and as Ag atoms or atomic clusters embedded within the barium/lithium titanate powder.

For 0 < *C*_{E}/*C*_{Ti} ≤ 0.10, the Ag elements mainly exist as Ag atoms or atomic clusters in the barium/lithium titanate powder.

Further, when the E element primarily includes at least one of Zr and Hf, and:
For 0 < *C*_{E}/*C*_{Ti} ≤ 0.30, the E elements mainly exist as atomic-scale atoms or atomic clusters, embedded within the barium/lithium titanate powder.

Preferably, for 0 < *C*_{E}/*C*_{Ti} ≤ 0.10, the E elements predominantly remain in the form of atomic-scale atoms or atomic clusters within the barium/lithium titanate powder.

Since Ti, Zr, and Hf belong to the same group (Group IVB) in the periodic table and share similar chemical properties, Zr and Hf can be incorporated into the barium/lithium titanate structure at relatively high doping levels.

Furthermore, when the E element primarily includes at least one of Cr, V, Nb, Ta, W, and Mo, and:
For 0.20 < *C*_{E}/*C*_{Ti} ≤ 0.30, the E elements exist in a dual state, appearing both as E nanoparticles or oxidized E nanoparticles and as atomic-scale dopants or atomic clusters, embedded within the barium/lithium titanate powder.

For 0 < *C*_{E}/*C*_{Ti} ≤ 0.20, the E elements primarily exist in the form of atomic-scale atoms or atomic clusters, embedded within the barium/lithium titanate powder.

Preferably, for 0 < *C*_{E}/*C*_{Ti} ≤ 0.10, the E elements predominantly remain in the form of atomic-scale atoms or atomic clusters within the barium/lithium titanate powder.

Since Ti shares similar chemical properties with Cr, V, Nb, Ta, W, and Mo, these elements can be incorporated at relatively high doping levels within the barium/lithium titanate structure.

Furthermore, when the E element primarily includes at least one of Mn, Sn, Pb, Bi, B, Be, and RE (rare earth elements), and:
For 0.10 < *C*_{E}/*C*_{Ti} ≤ 0.30, the E elements are primarily embedded as E nanoparticles or oxidized E nanoparticles in the barium/lithium titanate powder product, with E nanoparticles having a particle size ranging from 2nm to 20nm.

For 0.06 < *C*_{E}/*C*_{Ti} ≤ 0.10, the E elements are present both as E nanoparticles or oxidized E nanoparticles and as atomic-scale atoms or atomic clusters, embedded in the barium/lithium titanate powder product.

For 0 < *C*_{E}/*C*_{Ti} ≤ 0.06, the E elements are predominantly incorporated as atomic-scale atoms or atomic clusters within the barium/lithium titanate powder product.

Preferrably, for 0 < *C*_{E}/*C*_{Ti} ≤ 0.03, the E elements are primarily incorporated as atomic-scale atoms or atomic clusters within the barium/lithium titanate powder product.

Note: When *C*_{E}/*C*_{Ti} =0, no E element is doped, and the resulting product is pure barium/lithium titanate powder.
10. Specifically, as an optimized wet one-pot method, when the intermediate powder product obtained in step 2 mainly consists of nano sodium/potassium titanate nanoparticles with in-situ doped E element, steps 2 and 3 can be combined, and the preparation of the nano barium titanate/lithium titanate particle powder product with in-situ doped E element is achieved through a one-pot method.

The one-pot method combining steps 2 and 3 includes two approaches:
For the first approach: based on the completion of step 2, a barium/lithium source material containing Ba²⁺/Li⁺ or a barium/lithium source solution containing Ba²⁺/Li⁺ is added to the reaction system corresponding to step 2, and the reaction is continued at a certain temperature for a period of time.

The specific details regarding step 2 can be referred to from the above section about step 2.

Further, the barium/lithium source material includes at least one of the following: Ba(OH)₂, LiOH, BaCl₂, LiCl, Ba(NO₃)₂, LiNO₃ and Li₂SO₄.

Further, the barium/lithium source material includes at least one of Ba(OH)₂ and LiOH.
Further, in the reaction system after the addition of the barium/lithium source material, the total molar content of Ba²⁺/Li⁺ (*C*_{Ba/Li}) in the aqueous solution and the molar content of Ti (*C*_{Ti}) in the sodium/potassium titanate or titanic acid powder (*C*_{Ba/Li}/*C*_{Ti}) should satisfy the ratio of 0.8 ≤ *C*_{Ba/Li}/*C*_{Ti}.

Further,1 ≤ *C*_{Ba/Li}/*C*_{Ti}. Further, 1 ≤ *C*_{Ba/Li}/*C*_{Ti} ≤ 10.

Further, the continued reaction temperature is 50°*C*-*T*_{*f*(solution medium)}.

Further, the continued reaction temperature is 80°C-*T*_{*f*(solution medium)}. Further, the continued reaction temperature is 100°C-*T*_{*f*(solution medium)}.

Further, the continued reaction time is 10s-10h.

Further, the continued reaction time is 10s-1h.

Further, when the reaction temperature is *T*_{*f*(solution medium)}, the continued reaction time is 10s-15min;
Further, when the reaction temperature is *T*_{*f*(solution medium)}, the continued reaction time is 10s-5min;
Further, when the reaction temperature is *T*_{*f*(solution medium)}, the continued reaction time is 10s-2min;

In this reaction system, there are sufficient NaOH/KOH components in the solution, ensuring excellent reaction results.

For the second approach: At the beginning of step 2, an appropriate amount of barium/lithium source material containing Ba²⁺/Li⁺ is added together with NaOH/KOH into the reaction solution system, and then the reaction is carried out at a certain temperature for a period of time.

It has been found that during the hydrogen evolution and T removal reaction of the initial alloy in step 2, when the alkaline solution mainly consists of Ba(OH)₂ or (and) LiOH, at atmospheric pressure, even if the concentration of Ba(OH)₂ or (and) LiOH solution reaches its maximum concentration at the boiling point of the solution (over 10 mol/L), and the temperature reaches the boiling point of the solution (105°C - 130°C), the initial alloy still fails to undergo the hydrogen evolution and T removal reaction with Ba(OH)₂ or (and) LiOH solution. It almost remains in its original alloy state. Therefore, it is not possible to directly prepare nano barium/lithium titanate through hydrogen evolution and T removal reaction of the initial alloy with Ba(OH)₂ or (and) LiOH solution. Instead, the preparation of barium/lithium titanate must follow the path: Initial Alloy → Sodium/Potassium Titanate → Barium/Lithium Titanate, with the participation of NaOH/KOH in the reaction.

Therefore, in this second one-pot approach, the reaction solution must have a sufficiently effective concentration of NaOH/KOH to first convert the initial alloy to sodium/potassium titanate. At the same time, the concentration of Ba²⁺/Li⁺ in the reaction solution should not be too high, ensuring the transition from sodium/potassium titanate to barium/lithium titanate. The concentration should be appropriate because if the Ba²⁺/Li⁺ concentration is too high, it may hinder the conversion of the initial alloy to sodium/potassium titanate and also cause the waste of excessive Ba²⁺/Li⁺.

Further, in the process described, the barium/lithium source material includes at least one of the following: Ba(OH)₂, LiOH, BaCl₂, LiCl, Ba(NO₃)₂, LiNO₃, and Li₂SO₄.

Specifically, in the alkaline solution:
When the total concentration of NaOH/KOH is in the range of 5 mol/L to 7.5 mol/L, the total corresponding concentration of Ba²⁺/Li⁺ should not exceed 2.0 mol/L.

When the total concentration of NaOH/KOH is in the range of 7.5 mol/L to 10 mol/L, the total corresponding concentration of Ba²⁺/Li⁺ should not exceed 3.5 mol/L.

When the total concentration of NaOH/KOH is in the range of 10 mol/L to 15 mol/L, the total corresponding concentration of Ba²⁺/Li⁺ should not exceed 5 mol/L.

When the total concentration of NaOH/KOH is in the range of 15 mol/L to 30 mol/L, the total concentration of Ba²⁺/Li⁺ should not exceed 8 mol/L.

Further, to achieve the best transformation of the reaction from Initial Alloy → Sodium/Potassium Titanate → Barium/Lithium Titanate, the total concentration of NaOH/KOH in the one-pot method should range from 5 mol/L to 30 mol/L, with an optimal concentration of 7 mol/L to 15 mol/L. The concentration of Ba²⁺/Li⁺ should be kept as low as possible while still ensuring the complete transition from sodium/potassium titanate to barium/lithium titanate. This specific value can be determined based on the amount of Ti in the initial alloy of the reaction system.

Further after adding the barium/lithium source material containing Ba²⁺/Li⁺, the molar ratio of Ba²⁺/Li⁺ (*C*_{Ba/Li}) to Ti (*C*_{Ti}) in the initial alloy (*C*_{Ba/Li}/*C*_{Ti}) in the aqueous solution should satisfy 0.8 ≤ *C*_{Ba/Li}/*C*_{Ti}.

Further, 1 ≤ *C*_{Ba/Li}/*C*_{Ti};
Further, 1 ≤ *C*_{Ba/Li}/*C*_{Ti} ≤ *1.5.*

Further, 1 ≤ *C*_{Ba/Li}/*C*_{Ti} ≤ 3.

Further, 1 ≤ *C*_{Ba/Li}/*C*_{Ti} ≤ 10.

The specific details of Step 2 can be found in the detailed description of Step 2 above. According to the specific reaction conditions 1)-4) of Step 2, different morphologies of the intermediate sodium/potassium titanate powder product are obtained:
1) Under normal pressure, with a high concentration of NaOH/KOH and a high temperature of the alkaline solution, the intermediate powder product mainly consists of nano sodium/potassium titanate thin film powder with in-situ doped E element;
2) Under normal pressure, with a low concentration of NaOH/KOH and a low temperature of the alkaline solution, the intermediate powder product mainly consists of irregular nanoporous sodium/potassium titanate powder with in-situ doped E element;
3) Under normal pressure, with a moderate concentration of NaOH/KOH and a moderate temperature of the alkaline solution, the intermediate powder product mainly consists of a combination of irregular nanoporous sodium/potassium titanate powder with in-situ doped E element and nano sodium/potassium titanate thin film powder with in-situ doped E element;
4) When the reaction is conducted in a sealed container under pressure higher than atmospheric pressure, with a high concentration of NaOH/KOH and a temperature higher than the boiling point of the T*_{f solution}* under one atmosphere, the intermediate powder product mainly consists of nano sodium/potassium titanate tubes (or/and rods) with in-situ doped E element.

The one-pot method:
Further, the reaction temperature is 50°*C*-*T*_{*f*(solution medium)} (the boiling point of the solution medium);
Further, the reaction temperature is 80°C-*T*_{*f*(solution medium)}; Further, the reaction temperature is 100°C-*T*_{*f*(solution medium)},
Further, the reaction time is 10s-10h; Further, the reaction time is 10s-1h;
Further, when the reaction temperature is at *T*_{*f*(solution medium)}, the reaction time is 10s-15min;
Further, when the reaction temperature is at *T*_{*f*(solution medium)}, the reaction time is 10s-5min;
Further, when the reaction temperature is at *T*_{*f*(solution medium)}, the reaction time is 10s-2min;
In this reaction system, when the solution contains a sufficient amount of NaOH/KOH components and the content of *C*_{Ba/Li} in the solution is relatively low, the reaction performance is optimal.

Further, in order to reduce the particle size of the nano barium titanate/lithium titanate particle powder product with in-situ doped E element, at least one of the following three methods can be applied:
Method 1: during the reaction process of step 2 or (and) step 3, ultrasonic treatment is simultaneously applied to the reaction system; Further, the ultrasonic frequency ranges from 20 kHz to 106 kHz; Through ultrasonic treatment, the particle size of the intermediate powder product can be reduced to some extent, especially when the intermediate product is irregular nanoporous sodium/potassium titanate powder with in-situ doped E element.
Method 2: after step 3, mechanical crushing and dispersion treatment is performed, wherein the mechanical crushing and dispersion methods include at least one of ball milling and sand milling;

Further, by mechanically dispersing the product, the agglomerated nano barium/lithium titanate particles with in-situ doped E element can be further dispersed into finer particles.

Further, after mechanical dispersion treatment, the average particle size of the nano barium/lithium titanate particles with in-situ doped E element ranges from 10 nm to 250 nm.

Method 3: after step 2, mechanical crushing and dispersion treatment is applied to the intermediate powder product, wherein the mechanical crushing and dispersion methods include at least one of ball milling and sand milling.

After Step 2, the non-spherical intermediate powder products primarily include at least one of the following: nano sodium/potassium titanate films with in-situ doped E element, irregular nanoporous sodium/potassium titanate powders with in-situ doped E element, and nano sodium/potassium titanate tubes (or rods) with in-situ doped E element. It is evident that, compared to Method 2, which involves mechanical dispersion of spherical or near-spherical nano barium/lithium titanate products, Method 3 offers a more pronounced crushing and dispersion effect on non-spherical materials such as nano sodium/potassium titanate films, irregular nanoporous sodium/potassium titanate powders, and nano sodium/potassium titanate tubes (or rods). These morphologies are more susceptible to controlled fragmentation during the crushing process, resulting in superior dispersion outcomes.

For the nano sodium/potassium titanate film intermediate product, the film thickness is generally below 5 nm, with an average area greater than 500 nm². Therefore, sand milling or ball milling can easily break individual films, significantly reducing their average area by up to one-tenth or even less of their original size. This drastic reduction in area means that in the subsequent "spheronization" process of Step 3, the resulting non-solid spherical or near-spherical shell-like particles can achieve particle size ranges as low as 5 nm-50 nm, or even lower. Further, through additional treatment and condensation, these near-solid spherical or near-spherical particles can reach particle diameters as small as 2 nm-10 nm, or even smaller.

Since the area of individual films is greatly reduced, the resultant "spheronization" units formed by the merging and shrinkage of several small adjacent films also significantly decrease in size. Therefore, after sand milling or ball milling, the average particle diameter of the spherical or near-spherical nano barium/lithium titanate particles obtained via Step 3 can be reduced to 5 nm-150 nm, or even smaller.

Further, after sanding or ball milling treatment, the average particle diameter of these spherical or near-spherical particles can be reduced to 5 nm-100 nm, or even smaller.

The same mechanism also applies to intermediate products of irregular nanoporous sodium/potassium titanate powders, enabling sand milling or ball milling to significantly reduce their particle size. As a result, the spherical or near-spherical nano barium/lithium titanate particles with in-situ doped E element obtained through Step 3 can achieve an average particle diameter range as low as 5 nm-150 nm, or even smaller.

Furthermore, after sand or ball milling, the average particle diameter of the spherical or near-spherical nano barium/lithium titanate particles with in-situ doped E element obtained in Step 3 can be further reduced to 5 nm-100 nm, or even smaller.

The same mechanism also applies to intermediate powder products of nano sodium/potassium titanate tubes (or rods). After sand milling or ball milling, the spherical or near-spherical nano barium/lithium titanate particles with in-situ doped E element obtained in Step 3 can achieve an average particle diameter range as low as 5 nm-120 nm, or even smaller.

Furthermore, after sand or ball milling, the average diameter of the spherical or near-spherical nano barium/lithium titanate particles with in-situ doped E element obtained through Step 3 can be further reduced to 5 nm-80 nm, or even smaller.

In practical operations, to obtain the finest possible nano barium/lithium titanate powder products with in-situ doped E element, all three methods described above can be applied simultaneously.

In the second aspect, this invention also relates to an application of the nano barium titanate/lithium titanate powder material with in-situ doped E element prepared according to the preparation methods described above in the field of electronic ceramics, composite materials, coatings, powder metallurgy, multilayer ceramic capacitors, thermistors, piezoelectric ceramics, and battery materials.

Further, the nano barium/lithium titanate powder with in-situ doped E element can be used as formulation powder for multilayer ceramic capacitors (MLCCs); the nano lithium titanate powder with in-situ doped E element can be applied in lithium-ion batteries and asymmetric supercapacitor.

The beneficial effects of the present invention are mainly reflected in the following aspects:
First, a novel doping method is employed to achieve in-situ endogenous doping of E elements into nano barium/lithium titanate particles. Currently, effective methods for preparing doped barium titanate particles mainly include hydrothermal synthesis and sol-gel techniques. Both approaches involve forming a gel or suspension containing barium titanate precursors, introducing the dopant during this stage, and then proceeding with hydrothermal treatment or sintering to obtain doped barium titanate. This two-step doping method exhibits characteristics of external doping and often fails to achieve atomically uniform doping. In contrast, this application proposes an entirely new doping strategy: E elements are first uniformly distributed at the atomic scale within T-Ti(E) intermetallic compounds (solid solutions of E elements in titanium-based intermetallics) or T-Ti-E intermetallic compounds. These intermetallic compounds then undergo dehydrogenation reactions involving T removal, resulting in in-situ formation of E element-doped sodium/potassium titanate nanomaterials. Through subsequent cation exchange, the in-situ E element-doped nano barium/lithium titanate is obtained. Throughout this process, the E element consistently remains within solid phases-intermetallic compound, sodium/potassium titanate, and finally barium/lithium titanate-and cannot be easily removed. Therefore, E elements will still be in-situ doped into the newly generated nano barium titanate/lithium matrix, resulting in in-situ doped nano barium titanate/lithium particles with E elements. Depending on the dopant concentration, two primary doping forms can be achieved: Doping with E atoms or atomic clusters, and doping with E nanoparticles or E oxide nanoparticles. The core idea of this doping strategy lies in the initial preparation of intermetallic compounds with specific E element contents. According to alloy phase diagrams, different E elements have varying thermodynamic equilibrium solubilities in T-Ti intermetallic compounds. Even if the equilibrium solubility is low, non-equilibrium T-Ti(E) intermetallics with significantly higher solubility can still be obtained by rapid solidification from the melt, preventing the dopant from diffusing out in time. Therefore, as long as the cooling rate is high enough, theoretically, most dopant elements can be significantly dissolved into T-Ti intermetallics. This lays the foundation for the subsequent synthesis of doped nano barium/lithium titanate using the method described in this application.

Secondly, this application discovers and utilizes a spheronization mechanism during the ion-exchange process from sodium/potassium titanate or titanic acid to nano barium/lithium titanate. This enables the formation of spherical or near-spherical particles of nano barium/lithium titanate with in-situ doped E element, starting from non-spherical intermediate powders. Initially, the hydrogen evolution and T removal reaction of T-Ti(E) or T-Ti-E intermetallic compounds yields at least one of the following: thin-film powders, irregular nanoporous powders, and tubular/rod-like powders; they do not have spherical or near-spherical characteristics, which greatly limits their applications. However, the present application cleverly uses non spherical sodium/potassium titanate or titanic acid intermediate powders as precursors, and utilizes this novel rule to obtain spherical or near-spherical nano barium/lithium titanate products, which have great practical significance.

Third, this application enables the production of ultrafine spherical or near-spherical nano barium/lithium titanate powders with in-situ doped E elements. Because the basic units of intermediate powders, such as sodium/potassium titanate or titanic acid thin films, irregular nanoporous sodium/potassium titanate or titanic acid structures, and tubular/rod-like sodium/potassium titanate or titanic acid, have inherently small dimensions (e.g., film thickness and ligament in nanoporous structure are typically below 10 nm), it is possible to obtain barium/lithium titanate powders with particle sizes below 30 nm using them as precursors. Even when particle agglomeration leads to an increase in the size of non-free "spheronization" units, pre-treatments like ball milling or sand milling of such three typical non-spherical intermediates can significantly reduce their size prior to the ion-exchange reaction. It is also possible to comprehensively reduce the particle size of non free "spheroidized" units after displacement reaction, making their particle size below 100nm or even lower. For individual sodium/potassium titanate or titanic acid oxide films, after physical fragmentation treatment and subsequent displacement treatment, barium/lithium titanate powders with particle sizes below 20nm can be obtained.

Fourth, multiple morphologies of in-situ endogenous doped E elements can be obtained as nano barium titanate/lithium spherical or near-spherical powder products. For instance, based on the "film → hollow spherical shell → solid sphere" free spheronization mechanism, when spheronization is incomplete, relatively larger hollow or shell-like spherical particles may form. Upon further spheronization (e.g., by heat treatment), these particles can transform into smaller, more compact, solid or near-solid spherical particles.

Fifth, the reaction conditions are mild and simple, not requiring high temperature or pressure, making this method suitable for large-scale and low-cost production. Typically, the entire process can be completed in a hot alkaline solution at 100°C-150°C under atmospheric pressure. Moreover, a one-pot synthesis can be adopted, starting with directly adding the precursor alloy to a hot alkaline solution containing NaOH/KOH and Ba²⁺/Li⁺ ions, resulting in reaction times of only a few minutes

Sixth, the synthesized spherical or near-spherical E-doped nano barium/lithium titanate powders possess low sintering temperatures for film formation, making them highly compatible with MLCC (Multilayer Ceramic Capacitor) device fabrication. The produced nano barium/lithium titanate particles are nanometer-sized, controllable in their hollow-to-solid morphology, high in specific surface area, and metastable with high surface energy. Consequently, they require lower temperature for partial melting and film formation. The minimum sintering temperature can be reduced to 850°C-950°C. In comparison, traditional processes involving barium titanate nanoparticles typically require 1250°C for pressureless sintering, or 1050°C for hot-press sintering, with several hours of dwell time.

### Description of the Figures:

Figure 1: TEM morphology of the intermediate product-nano sodium titanate film powder obtained in Example 1;
Figure 2: Low- and high-magnification SEM images of the nano barium titanate powder product obtained in Example 1;
Figure 3: SEM morphology of the nano barium titanate powder product obtained in Example 1 after treatment at 950°C;
Figure 4: SEM morphology of the nano barium titanate powder product obtained in Example 3;
Figure 5: SEM morphology of the barium titanate powder product with in-situ doped Ag element obtained in Example 4;
Figure 6: SEM morphology of the barium titanate powder product with in-situ doped Nd element obtained in Example 5;
Figure 7: Low- and high-magnification SEM images of the intermediate product of irregular nanoporous sodium titanate powder obtained in Example 8;
Figure 8: SEM morphology of the nano barium titanate powder obtained in Example 10 after heat treatment at 300°C;
Figure 9: SEM morphology of the nano barium titanate powder obtained in Example 10 after heat treatment at 900°C.

### Detailed Embodiment:

### Example 1:

According to the nominal composition ratio of Ti₂₅Al₇₅ (atomic percent), raw materials of metallic Ti and Al were weighed and melted to obtain an alloy melt primarily composed of Ti₂₅Al₇₅. The alloy melt is then rapidly solidified into a ribbon with a thickness of approximately ~20 µm by melt spinning method with copper roller, and the initial alloy is primarily composed of TiAl₃ intermetallic compound.

At atmospheric pressure, 0.8g of the Ti₂₅Al₇₅ initial alloy ribbon is added to 110 ml of NaOH aqueous solution with a concentration of 10 mol/L, at its boiling point temperature (approximately 119°C), while continuously stirring. During the reaction with the concentrated alkaline solution, the Ti₂₅Al₇₅ initial alloy ribbon undergoes a vigorous hydrogen evolution and aluminum removal reaction, leading to nanofragmentation and simultaneous shape and compositional reconstruction to form the intermediate product of nano sodium titanate thin film powder.

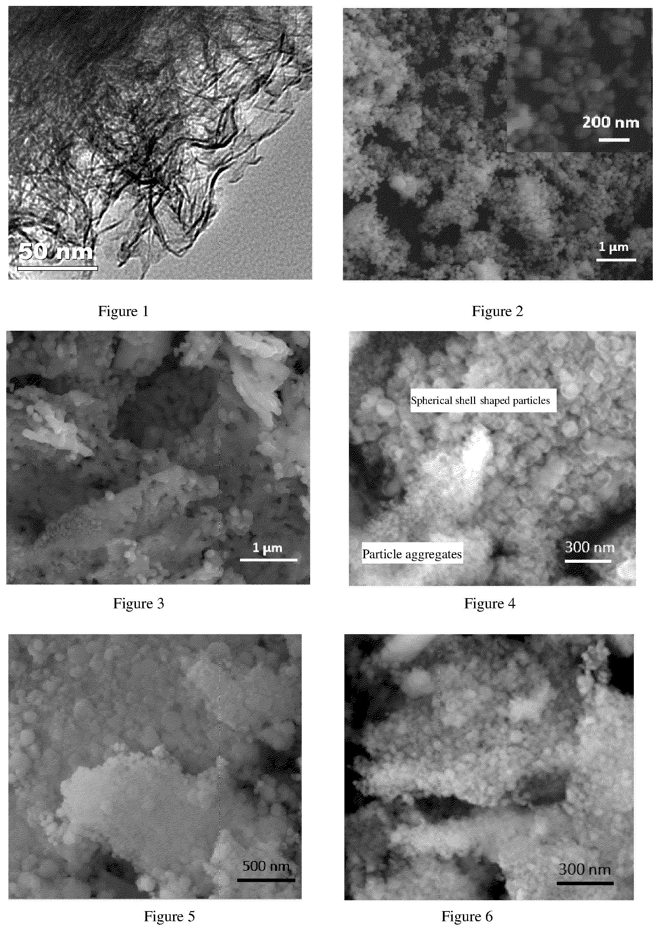

The hydrogen evolution and aluminum removal reaction completes within 15 seconds. After 2 minutes, the intermediate product, mainly composed of nano sodium titanate thin films, is collected, and its TEM morphology is shown in Figure 1. It is primarily composed of two-dimensional sodium titanate thin films with a thickness of less than 3 nm and an average area greater than 1000 nm².

After collecting the above nano sodium titanate thin film powder intermediate product, no cleaning is performed to retain the residual alkali.

At atmospheric pressure, the above sodium titanate thin film powder intermediate product is added to 50 ml of boiling water and stirred. Then 3.5 g of Ba(OH)₂•8H₂O is dissolved in 10 ml of boiling water, it is also added to the reaction system. During the reaction, the sodium titanate intermediate product is replaced with barium titanate, while the sodium titanate thin films undergo a morphological transformation into spherical shapes. After 4 minutes of reaction, the solid product in the reaction system is collected, resulting in a nano barium titanate powder primarily composed of spherical or near-spherical barium titanate particles. The powder particle size ranges from 5 nm to 150 nm, and its SEM morphology at low and high magnifications is shown in Figure 2.

The obtained nano barium titanate powder is heat-treated at 950°C for 1 hour in a loose state, which leads to the sintering and film formation of the powder, as shown in Figure 3. This demonstrates that the obtained nano barium titanate powder exhibits excellent low-temperature sintering properties, showing great potential for applications in the field of electronic ceramics, such as multilayer ceramic capacitors.

### Example 2:

According to the steps of Example 1, the intermediate product primarily composed of nano sodium titanate thin films is first obtained and collected.

After collecting the above nano sodium titanate thin film powder intermediate product, no cleaning is performed to retain the residual alkali. It is then subjected to sand milling treatment. Due to the large area of the thin films, they can easily be broken into fragmented sodium titanate thin film pieces (for example, fragments with an average area of less than 500 nm²), while also improving their dispersibility.

The above sand-milled fragmented nano sodium titanate thin film powder intermediate product is then added to 100 ml of boiling water. Under stirring, 3.5 g of Ba(OH)₂•8H₂O is dissolved in 10 ml of boiling water, and then it is added to the reaction system. During the reaction, the sodium titanate thin film intermediate product is replaced with barium titanate, and the sodium titanate thin films undergo a morphological transformation into spherical shapes. After 5 minutes of reaction, the solid product in the reaction system is collected, resulting in a nano barium titanate powder primarily composed of spherical or near-spherical barium titanate particles. Due to the refinement of the intermediate product, the resulting product has a particle size range of 5 nm to 45 nm.

The spherical or near-spherical nano barium titanate powder, which has certain agglomeration characteristics, is then subjected to sand milling dispersion treatment again. This results in spherical or near-spherical ultrafine nanobarium titanate powder with excellent dispersibility, and the powder particle size range is 5 nm to 40 nm.

### Example 3:

According to the nominal composition ratio of Ti₂₅Al₇₅ (atomic percent), raw materials of metallic Ti and Al were weighed and melted to obtain an alloy melt primarily composed of Ti₂₅Al₇₅. The alloy melt is then rapidly solidified into a ribbon with a thickness of approximately ~20 µm by melt spinning method with copper roller, and the initial alloy is primarily composed of TiAl₃ intermetallic compound.

A 110 ml of 10 mol/L NaOH aqueous solution is prepared, and 3.5 g of Ba(OH)₂•8H₂O is dissolved into this NaOH solution. Under normal pressure, the alkaline solution is heated to its boiling point, then adding 0.8 g of the Ti₂₅Al₇₅ initial alloy ribbons into the alkaline solution to react.

The hydrogen evolution and aluminum removal reaction is completed within 30 seconds. During the reaction, the initial alloy ribbons first undergo a hydrogen evolution and aluminum removal transformation into nano sodium titanate thin film intermediate products, which are then immediately replaced by barium titanate. At the same time, the sodium titanate thin films undergo a morphological transition into spherical shapes.

After 3.5 minutes from the start of the hydrogen evolution and aluminum removal reaction, collecting the solid substance in the reaction system. This yields a nano barium titanate powder primarily composed of spherical or near-spherical barium titanate particles, as shown in the SEM images in Figure 4. The morphology includes two main types: one is an agglomerate of small particles, where each fine ligament unit (non-free "spherical" unit) has a particle size range of 5 nm to 60 nm. These small units aggregate into agglomerates with a size of about 1 µm. This morphology of agglomerated powder particles may be related to the entangled agglomeration of the sodium titanate thin film intermediate product. The other type is incomplete hollow spherical shell particles, with an outer diameter ranging from 10 nm to 120 nm and a shell thickness of less than 10 nm. Each individual hollow spherical shell particle may have evolved from a single sodium titanate thin film intermediate product.

The resulting nano barium titanate powder is heat-treated at 850°C for 4 hours under compacted conditions, which leads to the sintering and film formation of the powder. This demonstrates that the obtained nano barium titanate powder has excellent low-temperature sintering performance, showing great application prospects in the field of electronic ceramics, such as in multilayer ceramic capacitors (MLCC).

### Example 4

According to the nominal composition of Ag₁Ti_{24.75}Al_{74.25} (atomic percent), raw materials of metallic Ag, Ti, and Al are weighed and melted to obtain an alloy melt primarily composed of Ag₁Ti_{24.75}Al_{74.25}. The alloy melt is then rapidly solidified into ~20 µm thick ribbon-shaped initial alloy by melt spinning method with copper roller. This initial alloy is primarily composed of TiAl₃ (Ag) intermetallic compounds with Ag element in solid solution.

Under normal pressure, adding 0.25 g of the Ag₁Ti_{24.75}Al_{74.25} initial alloy ribbons into 50 ml of a 10 mol/L NaOH aqueous solution at its boiling point temperature (about 119°C), and stir continuously. During the reaction of the Ag1Ti_{24.75}Al_{74.25} initial alloy strips with the concentrated alkaline solution, the alloy ribbons undergo a vigorous hydrogen evolution and aluminum removal reaction, resulting in nanofragmentation. Simultaneously, the morphology and composition of the material are reconstructed, generating a nano sodium titanate thin film intermediate product with in-situ doped Ag element in the form of atoms or atomic clusters.

The hydrogen evolution and aluminum removal reaction is completed within 15 seconds. After maintaining the temperature for an additional 3 minutes to ensure complete reaction, dissolve 1g of Ba(OH)₂•8H₂O in 5ml of boiling water and add it to the reaction system with stirring. During the reaction, the nano sodium titanate thin film intermediate product with in-situ doped Ag element is replaced by a nano barium titanate with in-situ doped Ag element. At the same time, the sodium titanate thin film matrix undergoes a morphological transition into spherical shapes. After mixing for 3 minutes, collect the solid product from the reaction system, which consists primarily of spherical or near-spherical nano barium titanate particles with in-situ doped Ag element. The particle size ranges from 5 nm to 150 nm, and the SEM images are shown in Figure 5.

The as-prepared nano barium titanate powder, which has certain agglomeration characteristics, is then subjected to sand milling and dispersion treatment to obtain a nano barium titanate powder with in-situ doped Ag element, exhibiting excellent dispersion properties. The particle size of this powder ranges from 5 nm to 140 nm.

### Example 5

According to the nominal composition of Nd_{0.2}Ti_{24.8}Al₇₅ (atomic percent), raw materials of metallic Ti_{99.5}Nd_{0.5} solid solution (containing rare earth Nd), Ti, and Al were weighed and melted to obtain an alloy melt primarily composed of Nd_{0.2}Ti_{24.8}Al₇₅. The alloy melt is then rapidly solidified into ~20 µm thick ribbon-shaped initial alloy by melt spinning method with copper roller. This initial alloy is primarily composed of TiAl₃(Nd) intermetallic compounds with Nd element in solid solution.

Under normal pressure, add 0.25 g of the Nd_{0.2}Ti_{24.8}Al₇₅ initial alloy ribbons into 50 ml of a 10 mol/L NaOH aqueous solution at its boiling point temperature (about 119°C), and stir continuously. During the reaction of the Nd_{0.2}Ti_{24.8}Al₇₅ initial alloy ribbons with the concentrated alkaline solution, the alloy ribbons undergo a vigorous hydrogen evolution and aluminum removal reaction, resulting in nanofragmentation. Simultaneously, the morphology and composition of the material are reconstructed, generating a nano sodium titanate thin film intermediate product with in-situ doped Nd element in the form of atoms or atomic clusters.

The hydrogen evolution and aluminum removal reaction is completed within 15 seconds. After maintaining the temperature for an additional 3 minutes to ensure complete reaction, dissolve 1g of Ba(OH)₂•8H₂O in 5ml of boiling water and add it to the reaction system with stirring. During the reaction, the nano sodium titanate thin film intermediate product with in-situ doped Nd element is replaced by a nano barium titanate with in-situ doped Nd element. At the same time, the sodium titanate thin film matrix undergoes a morphological transition into spherical shapes. After mixing for 3 minutes, collect the solid product from the reaction system, which consists primarily of spherical or near-spherical nano barium titanate particles with in-situ doped Nd element. The particle size ranges from 5 nm to 75 nm, and the SEM images are shown in Figure 6.

The resulting nano barium titanate powder, which has certain agglomeration characteristics, is then subjected to sand milling and dispersion treatment to obtain a nan -barium titanate powder with in-situ doped Nd element, exhibiting excellent dispersion properties. The particle size of this powder ranges from 5 nm to 60 nm.

### Example 6

According to the nominal composition of Zr₃Ti₂₂Al₇₅ (atomic percent), raw materials of metallic Zr, Ti, and Al were weighed and and melted to obtain an alloy melt primarily composed of Zr₃Ti₂₂Al₇₅. The alloy melt is then rapidly cooled into ribbon-shaped initial alloy with a thickness of 20µm-30µm by melt spinning method with copper roller. This initial alloy mainly consists of the TiAl₃(Zr) intermetallic compound with Zr element in solid solution.

Under atmospheric pressure, add 0.25g of the prepared Zr₃Ti₂₂Al₇₅ initial alloy ribbons into 50ml of 10mol/L KOH aqueous solution, heated to its boiling point (approximately 125°C) and continuously stirred. During the reaction with the concentrated alkali solution, the initial alloy ribbons undergo intense hydrogen evolution and Al removal reaction, resulting in nanofragmentation. Simultaneously, the shape and composition of the material are reconstructed, forming nano potassium titanate thin film powder intermediate product with in-situ doped Zr element in the form of atoms or atomic clusters.

The hydrogen evolution and Al removal reaction ends within 15 seconds. The mixture is maintained at temperature for an additional 3 minutes to ensure the reaction is completed. Then, while stirring, 0.20g of LiCl is added to the reaction system. During the reaction, the nano potassium titanate thin film powder intermediate product with in-situ doped Zr element is replaced by nano lithium titanate with in-situ doped Zr element, and the nano potassium titanate thin film matrix undergoes a shape mutation into spherical form. After 3 minutes of mixed reaction, the solid product in the reaction system is collected, resulting in a powder composed mainly of spherical or near-spherical lithium titanate particles with in-situ doped Zr element, with particle sizes ranging from 5nm to 150nm.

### Example 7

According to the nominal composition of Au₁Ti₂₃Al₇₅ (atomic percent), raw materials of metallic Au, Ti, and Al were weighed and melted to obtain an alloy melt primarily composed of Au₁Ti₂₃Al₇₅. The alloy melt is then rapidly cooled into ribbon-shaped initial alloy with a thickness of 20µm-30µm by melt spinning method with copper roller. This initial alloy mainly consists of the TiAl₃(Au) intermetallic compound with Au element in solid solution.

At atmospheric pressure, 0.25 g of the above-prepared Au₁Ti₂₃Al₇₅ alloy ribbons were added into 50 mL of NaOH aqueous solution with a concentration of 10 mol/L, heated to its boiling point (~119°C), and continuously stirred. During the reaction with the concentrated alkaline solution, the Au₁Ti₂₃Al₇₅ alloy ribbons undergo intense hydrogen evolution and Al removal reaction, resulting in nanofragmentation. Simultaneously, the shape and composition of the material are reconstructed, forming nano sodium titanate thin film powder intermediate product with in-situ doped Au element in the form of dispersed Au nanoparticles. The particle size of the Au nanoparticles ranged from 2 nm to 10 nm.

The dealloying and hydrogen evolution reaction completed within 15 seconds. The system was held at temperature for an additional 3 minutes to ensure complete reaction. Then, under stirring, 1 g of Ba(OH)₂•8H₂O was added into the reaction system. During the reaction, the nano sodium titanate thin film powder intermediate product with in-situ doped Au nanoparticles was converted into nano lithium titanate with in-situ doped Au nanoparticles, accompanied by a morphological transformation from film-like to spherical of the sodium titanate thin film matrix. After 3 minutes of mixed reaction, the solid product in the reaction system was collected, yielding a powder primarily composed of spherical or near-spherical lithium titanate particles with in-situ doped Au nanoparticles. The particle size of such lithium titanate particles ranged from 5 nm to 150 nm, and the embedded Au nanoparticles had a size range of 2 nm to 10 nm.

### Example 8

According to the nominal composition of Ti₂₅Al₇₅ (atomic percent), raw materials of metallic Ti and Al were weighed and melted to obtain an alloy melt primarily composed of Ti₂₅Al₇₅. The alloy melt is then rapidly cooled into ribbon-shaped initial alloy with a thickness of ~30 µm by melt spinning method with copper roller, and the initial alloy is primarily composed of TiAl₃ intermetallic compound.

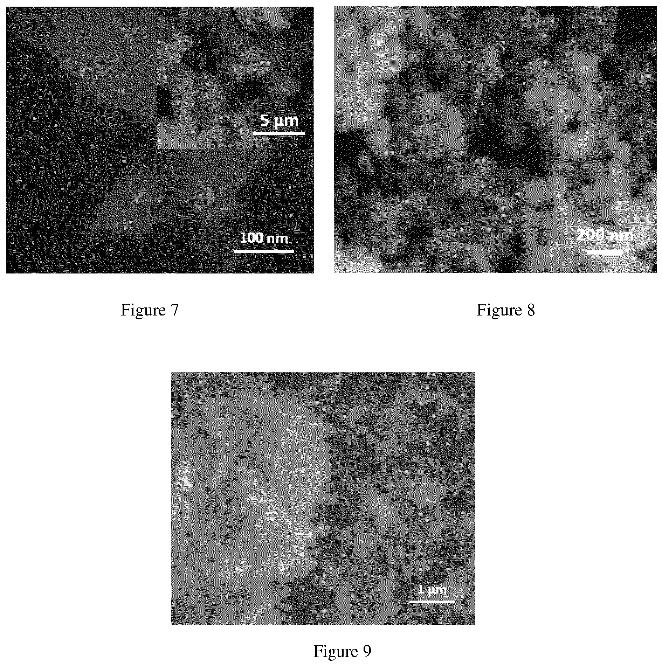

Under atmospheric pressure, 0.25 g of the above-prepared Ti₂₅Al₇₅ alloy ribbons were reacted with 20 ml of 10 mol/L NaOH aqueous solution at 35°C for 2 hours, resulting in irregular, coarsely crushed, nanoporous sodium titanate powders with particle sizes ranging from 0.1 µm to 5 µm. The internal ligaments were smaller than 5 nm, as shown in Figure 7.

The resulting irregular nanoporous sodium titanate powder intermediate was collected without washing, in order to retain the residual NaOH.

Under atmospheric pressure, 2 g of Ba(OH)₂•8H₂O was dissolved in 10 ml of water and heated to its boiling point. The previously obtained nanoporous sodium titanate powder was then added to the solution under ultrasonic agitation and stirring. After 10 minutes of reaction, the solid powder was collected, yielding a nanoscale barium titanate powder mainly composed of spherical or near-spherical barium titanate particles, with particle sizes ranging from 5 nm to 150 nm.

### Example 9

According to the nominal composition of Ti₂₅Al₇₅ (atomic percent), raw materials of metallic Ti and Al were weighed and melted to obtain an alloy melt primarily composed of Ti₂₅Al₇₅. The alloy melt is then rapidly cooled into ribbon-shaped initial alloy with a thickness of ~25 µm by melt spinning method with copper roller, and the initial alloy is primarily composed of TiAl₃ intermetallic compound.

At room temperature and pressure, 0.5g of the initial alloy ribbon prepared above is placed in a sealed reaction vessel lined with polytetrafluoroethylene with 50mL of a 10mol/L NaOH aqueous solution; Then immediately raise the temperature of the sealed reaction vessel and the initial alloy with NaOH aqueous solution to 250 °C within 10 minutes, and keep it at that temperature for 20 minutes; At this time, the pressure inside the reaction vessel is higher than atmospheric pressure;

After 20 minutes, the sealed reaction vessel was quickly cooled by immersion in cold water. Once it reached room temperature, the internal pressure was released to atmospheric pressure. The solid products were then separated from the solution, yielding a sodium titanate nanotube powder intermediate, with tube outer diameters ranging from 3 nm to 12 nm.

The obtained sodium titanate nanotube powder intermediate was collected without washing, in order to retain the residual NaOH.

Under atmospheric pressure, 4 g of Ba(OH)₂•8H₂O was dissolved in 20 mL of water and heated to its boiling point. Under ultrasonic agitation and stirring, the sodium titanate nanotube powder intermediate was added to the solution. After 10 minutes of reaction, the solid product was collected, yielding a nanoscale barium titanate powder mainly composed of spherical or near-spherical barium titanate particles, with particle sizes ranging from 5 nm to 200 nm.

### Example 10

According to the nominal composition Ti₄₀Al₆₀ (atomic percent), raw materials of metallic Ti and Al were weighed and melted to obtain an alloy melt with a primary composition of Ti₄₀Al₆₀. The alloy melt is then rapidly cooled into ribbon-shaped initial alloy with a thickness of ~1mm by melt spinning method with copper roller, and the initial alloy is primarily composed of TiAl₂ and TiAl intermetallic compound.

Under atmospheric pressure, 0.25 g of the above-prepared Ti₄₀Al₆₀ alloy ribbons were added to 50 mL of 15 mol/L KOH aqueous solution at its boiling point (approximately 150°C) with continuous stirring. During the reaction between the Ti₄₀Al₆₀ alloy ribbons and the concentrated alkaline solution, the Ti₄₀Al₆₀ alloy ribbons undergo intense hydrogen evolution and Al removal reaction, resulting in nanofragmentation. Simultaneously, the shape and composition of the material are reconstructed, forming nano potassium titanate thin film powder intermediate product, with individual film thicknesses ranging from 0.25 nm to 3 nm and average surface areas greater than 1000 nm².

The above potassium titanate thin-film powder material, after separation from the alkaline solution, was dispersed in water. While stirring, a 0.025 mol/L HCl solution was gradually added to continuously decrease the PH value of the mixed solution, eventually stabilizing it within the range of pH 2-5. After 10 minutes, the solids were separated, washed, and dried to obtain nano-sized titanic acid thin films with individual thicknesses of approximately 0.25 nm-3 nm and average single-layer surface areas greater than 1000 nm².

Under atmospheric pressure, the above titanic acid thin-film intermediate product was added into 20 mL of boiling water. Separately, 1 g of Ba(OH)₂•8H₂O was dissolved in 5 mL of boiling water and also added to the reaction system under stirring. During the reaction, the titanic acid thin-film intermediate product was converted into barium titanate, accompanied by a gradual transformation in shape from film-like to spherical.

Pathway 1: Maintain the volume of the solution by adding water, and after 20 minutes of reaction, collect the solid substance. The solid product was then collected and heated to 300°C and held for 5 minutes to further promote spherification. The resulting powder consisted mainly of spherical or near-spherical barium titanate nanoparticles with particle sizes ranging from 10 nm to 150 nm. The SEM morphology is shown in Figure 8.

Pathway 2: Maintain the volume of the solution by adding water, and after 20 minutes of reaction, collect the solid substance. The solid product was then collected and heated to 900°C and held for 1 minute to further enhance the spherification process. The resulting powder consisted mainly of spherical or near-spherical barium titanate nanoparticles with particle sizes ranging from 10 nm to 300 nm. The SEM morphology is shown in Figure 9. The barium titanate nanopowder with certain aggregation characteristics was further processed via sand milling and dispersion, yielding well-dispersed spherical or near-spherical barium titanate powders with particle sizes ranging from 10 nm to 300 nm.

### Example 11

According to the nominal composition of Ti₂₅Al₇₅ (atomic percent), raw materials of metallic Ti and Al were weighed and melted to obtain an alloy melt primarily composed of Ti₂₅Al₇₅. The alloy melt is then rapidly cooled into ribbon-shaped initial alloy with a thickness of ~20 µm by melt spinning method with copper roller, and the initial alloy is primarily composed of TiAl₃ intermetallic compound.

Under atmospheric pressure, 0.8 g of the above-prepared Ti₂₅Al₇₅ alloy ribbons were added to 110 mL of 10 mol/L NaOH aqueous solution at its boiling point (approximately 119°C), with continuous stirring. During the reaction between the Ti₂₅Al₇₅ alloy ribbons and the concentrated alkaline solution, the Ti₂₅Al₇₅ alloy ribbons undergo intense hydrogen evolution and Al removal reaction, resulting in nanofragmentation. Simultaneously, the shape and composition of the material are reconstructed, resulting in a nano-sized sodium titanate thin-film powder intermediate.

The Al removal reaction completed within 15 seconds. After 2 minutes, the intermediate product, mainly composed of sodium titanate thin-films, was collected. These sodium titanate thin-films were predominantly two-dimensional sodium titanate thin films with a thickness of less than 3 nm and an average area larger than 1000 nm².

The obtained sodium titanate thin-films intermediate product was mixed and ground with BaCO₃ powder via sand milling. The molar ratio of Ba²⁺ to Ti in the sodium titanate thin-films intermediate was approximately 1:1. The mixed powders were then compacted and subjected to a solid-state reaction at 1000°C for 1 hour. Afterward, the product was crushed and dispersed using ball milling and sand milling, resulting in a nano barium titanate powder product with particle sizes ranging from 20 nm to 300 nm.

### Example 12

According to the nominal composition of Ti₂₅Zn₇₅ (atomic percent), raw materials of metallic Ti and Al were weighed and melted to obtain an alloy melt primarily composed of Ti₂₅Zn₇₅. The alloy melt is then rapidly cooled into ribbon-shaped initial alloy with a thickness of ~30 µm by melt spinning method with copper roller, and the initial alloy is primarily composed of TiZn₃ intermetallic compound.

Under atmospheric pressure, 0.25 g of the above-prepared Ti₂₅Zn₇₅ alloy ribbons were added into 50 mL of 15 mol/L KOH aqueous solution maintained at 105°C to 115°C, with continuous stirring.

During the reaction between the Ti₂₅Zn₇₅ alloy ribbons and the concentrated alkaline solution, the Ti₂₅Zn₇₅ alloy ribbons undergo intense hydrogen evolution and Zn removal reaction, resulting in nanofragmentation. Simultaneously, the shape and composition of the material are reconstructed, resulting in a nano-sized potassium titanate thin-film powder intermediate. These nano thin-films had a single-layer thickness of 0.25 nm to 3 nm and an average area greater than 1000 nm² .

The Zn removal reaction completed within 30 seconds. The system was then maintained at reaction temperature for an additional 3 minutes. While stirring, 1 g of Ba(OH)₂•8H₂O dissolved in 5 mL of boiling water was added to the system. During the reaction, the potassium titanate intermediate was replaced by barium titanate, and at the same time, the thin potassium titanate films underwent a spherical morphological transformation.

After 40 seconds of reaction, the solid products in the system were collected, yielding a barium titanate nanopowder mainly composed of spherical or near-spherical particles with sizes ranging from 5 nm to 80 nm.

This spherical or near-spherical barium titanate nanopowder, which displayed some degree of agglomeration, was then dispersed by sand milling, resulting in a barium titanate nanopowder with excellent dispersibility and a particle size distribution ranging from 5 nm to 75 nm.

The technical features described in the above embodiments can be combined in any manner. For the sake of brevity, all possible combinations of the technical features in the above embodiments have not been described in detail. However, as long as such combinations do not conflict with each other, they should be considered within the scope described in this specification.

The above-mentioned embodiments are merely several implementations of the present invention and are described in a specific and detailed manner. However, this should not be interpreted as a limitation to the scope of the invention. It should be noted that those skilled in the art may make various modifications and improvements without departing from the spirit of the invention, and these should also fall within the scope of the present invention. Therefore, the scope of protection of the present patent shall be determined by the appended claims.

## Claims

1. A method for preparing doped nano barium titanate/lithium titanate powder, wherein comprising the following steps:
at step 1, preparing an initial alloy comprising T elements, Ti elements, and E elements; the phase composition of the initial alloy includes T-Ti(E) intermetallic compounds with E elements in solid solution or T-Ti-E intermetallic compounds containing E elements; wherein the molar ratio of E elements to Ti elements in the T-Ti(E) or T-Ti-E intermetallic compounds is 0≤*C*_{E}/C_{Ti}≤0.30; the T elements include at least one of Al and Zn, and the E elements include at least one of Zr, Hf, Cr, V, Nb, Ta, W, Mo, Mn, Fe, Ni, Co, Sn, Pb, Bi, B, Be, Au, Pt, Pd, Ru, Rh, Re, Os, Ir, Ag, Cu, and RE, wherein RE includes at least one of rare earth elements;
at step 2:
the initial alloy is subjected to hydrogen evolution and T removal reaction with an alkaline solution mainly composed of NaOH/KOH to obtain intermediate powder products; the intermediate powder product mainly includes at least one of the following: nano sodium/potassium titanate thin-film powder with in-situ doped E element, irregular nanoporous sodium/potassium titanate powder with in-situ doped E element, nano sodium/potassium titanate tubes (or/and rods) with in-situ doped E element;
alternatively, reacting the intermediate powder product composed of nano sodium/potassium titanate with in-situ doped E element with a dilute acid to obtain a hydrogen-ion-exchanged titanic acid intermediate powder product with in-situ doped E element, which mainly includes at least one of the following: nano titanic acid thin-film powder with in-situ doped E element; irregular nanoporous titanic acid powder with in-situ doped E element, nano titanic acid tubes (or/and rods) with in-situ doped E element;
at step 3: reacting the intermediate powder product obtained in step 2 with a barium/lithium source material containing Ba²⁺/Li⁺ at a specific temperature, pressure, and medium atmosphere for a period of time, causing cation displacement reaction and "spheroidization" morphology change of such non spherical intermediate powder product, to obtain spherical or near-spherical barium/lithium nanoparticle powder product with in-situ doped E element.

2. The method for preparing doped nano barium titanate/lithium titanate powder according to claim 1, wherein the initial alloy is subjected to reaction with an alkaline solution mainly composed of NaOH/KOH, different reaction conditions result in different intermediate powder products:
(1) under atmospheric pressure, when the NaOH/KOH concentration is relatively high and the alkaline solution temperature is high, the intermediate powder product mainly comprises nano sodium/potassium titanate thin-film powder with in-situ doped E element;
(2) under atmospheric pressure, when the NaOH/KOH concentration is low and the alkaline solution temperature is low, the intermediate powder product mainly comprises irregular nanoporous sodium/potassium titanate powder with in-situ doped E element;
(3) under atmospheric pressure, when the NaOH/KOH concentration is moderate and the alkaline solution temperature is moderate, the intermediate powder product mainly comprises irregular nanoporous sodium/potassium titanate powder with in-situ doped E element and nano sodium/potassium titanate thin-film powder with in-situ doped E element;
(4) when the reaction takes place in a closed container above atmospheric pressure with a higher concentration of NaOH/KOH, and the temperature is higher than the boiling point (*T*_{*f*(solution)}) of the solution at one atmosphere, the intermediate powder product mainly comprises nano sodium/potassium titanate tubes (or/and rods) with in-situ doped E element.

3. The method for preparing doped nano barium titanate/lithium titanate powder according to claim 1, wherein the dominant doping methods of the in-situ doped E element mainly include at least one of the following two methods:
a) the E element is in-situ endogenously embedded in the sodium/potassium titanate or titanic acid intermediate powder product in the form of E nanoparticles or oxidized E nanoparticles, and the E nanoparticles or oxidized E nanoparticles exist as a heterogeneous phase relative to the sodium/potassium titanate or titanic acid matrix;
b) the E element is in-situ endogenously embedded in the sodium/potassium titanate or titanic acid intermediate powder product in the form of E atoms or atomic clusters, and the E atoms or atomic clusters do not exist as a heterogeneous phase relative to the sodium/potassium titanate or titanic acid matrix, or the E atoms or atomic clusters do not exist as a distinct heterogeneous phase relative to the sodium/potassium titanate or titanic acid matrix.

4. The method for preparing doped nano barium titanate/lithium titanate powder according to claim 1, wherein the conditions for "spheroidization" and cation displacement reaction of the non spherical intermediate powder product mainly comprise: the reaction medium is primarily a solution-based medium, with pressure at atmospheric pressure or higher than atmospheric pressure; the barium/lithium source material mainly consists of water-soluble salts or alkalis containing Ba²⁺/Li⁺, and the reaction temperature is 30°C-*T*_{*f*(solution medium)}; the *T*_{*f*(solution medium)} is the boiling point temperature of the solution medium under atmospheric pressure.

5. The method for preparing doped nano barium titanate/lithium titanate powder according to claim 1, wherein the average particle size of the nano barium titanate/lithium titanate particles with in-situ doped E element ranges from 5 nm to 300 nm.

6. The method for preparing doped nano barium titanate/lithium titanate powder according to claim 1, wherein the barium/lithium source material containing Ba²⁺/Li⁺ includes at least one of Ba²⁺/Li⁺-containing alkalis and Ba²⁺/Li⁺-containing salts.

7. The method for preparing doped nano barium titanate/lithium titanate powder according to claim 1, wherein when the reaction medium is non-aqueous, the step 3 specifically involves uniformly mixing the intermediate powder product described in step 2 with barium/lithium source material containing Ba²⁺/Li⁺ by ball milling and (or) sand milling, followed by a solid-phase reaction, and the ratio of the molar content of Ba²⁺/Li⁺ to the molar content of Ti in the intermediate powder product in the reaction system ranges from 0.75:1 to 1.25:1; and after the reaction, ball milling or sand milling is performed to crush and disperse the product, resulting in the nano barium/lithium titanate powder products with in-situ doped E element.

8. The method for preparing doped nano barium titanate/lithium titanate powder according to claim 1, wherein when the primary "spherization" in step 3 is insufficient, the degree of "spherization" can be increased by at least one of the following three methods:
(1) placing the reaction system in a sealed container and subjecting it to high temperature and pressure for a period of time, which can further shrink the non-free "spherized" units into spherical or near-spherical nano barium/lithium titanate particles with in-situ doped E element and higher degree of solidity;
(2) continuously evaporating the solution in the reaction system until dry, then heating the residual solid matter in the same reaction container to 150°C-400°C and maintaining that temperature for a period of time;
(3) collecting the solid matter from the reaction system and heating it to 150°C-1300°C, maintaining the temperature for a period of time.

9. The method for preparing doped nano barium titanate/lithium titanate powder according to claim 1, wherein:
when the E element mainly includes at least one of Au, Pt, Pd, Ru, Rh, Re, Os and Ir, and 0<*C*_{E}/*C*_{T}i<0.01, the E element is primarily doped in-situ as E atoms or atomic clusters in the barium titanate/lithium titanate powder product.
when the E element mainly includes at least one of Cu, Fe, Ni and Co, and 0<*C*_{E}/*C*_{Ti}≤0.02, the E element is primarily doped in-situ as E atoms or atomic clusters in the barium titanate/lithium titanate powder product.
when the E element mainly includes Ag, and 0<*C*_{E}/*C*_{Ti}≤0.10, the E element is primarily doped in-situ as E atoms or atomic clusters in the barium titanate/lithium titanate powder product.
when the E element mainly includes at least one of Zr and Hf, and 0<*C*_{E}/*C*_{Ti}≤0.30, the E element is primarily doped in-situ as E atoms or atomic clusters in the barium titanate/lithium titanate powder product.
when the E element mainly includes at least one of Cr, V, Nb, Ta, W and Mo, and 0<*C*_{E}/*C*_{Ti}≤0.10, the E element is primarily doped in-situ as E atoms or atomic clusters in the barium titanate/lithium titanate powder product.
when the E element mainly includes at least one of Mn, Sn, Pb, Bi, B, Be and RE, and 0<*C*_{E}/*C*_{Ti}≤0.06, the E element is primarily doped in-situ as E atoms or atomic clusters in the barium titanate/lithium titanate powder product.

10. The method for preparing doped nano barium titanate/lithium titanate powder according to claim 1, wherein the steps 2 and 3 are combined, and the preparation of the nano barium titanate/lithium titanate particle powder product with in-situ doped E element is achieved through a one-pot method.

11. The method for preparing doped nano barium titanate/lithium titanate powder according to claim 10, wherein the one-pot method combining steps 2 and 2 includes two approaches:
for the first approach: based on the completion of step 2, a barium/lithium source material containing Ba²⁺/Li⁺ or a barium/lithium source solution containing Ba²⁺/Li⁺ is added to the reaction system corresponding to step 2, and the reaction is continued at a certain temperature for a period of time.
for the second approach: at the beginning of step 2, an appropriate amount of barium/lithium source material containing Ba²⁺/Li⁺ is added together with NaOH/KOH into the reaction solution system, and then the reaction is carried out at a certain temperature for a period of time.

12. The method for preparing doped nano barium titanate/lithium titanate powder according to claim 1, wherein: in order to reduce the particle size of the nano barium titanate/lithium titanate particle powder product with in-situ doped E element, at least one of the following three methods can be applied:
method 1: during the reaction process of step 2 or (and) step 3, ultrasonic treatment is simultaneously applied to the reaction system;
method 2: after step 3, mechanical crushing and dispersion treatment is performed, wherein the mechanical crushing and dispersion methods include at least one of ball milling and sand milling;
method 3: after step 2, mechanical crushing and dispersion treatment is applied to the intermediate powder product, wherein the mechanical crushing and dispersion methods include at least one of ball milling and sand milling.

13. The method for preparing doped nano barium titanate/lithium titanate powder according to claim 1, wherein the minimum sintering film formation temperature of the spherical or near-spherical nano barium titanate/lithium titanate particle powder product with in-situ doped E element does not exceed 950°C.

14. An application of the nano barium titanate/lithium titanate powder material with in-situ doped E element prepared according to the preparation methods of any one of claims 1-13 in the field of electronic ceramics, composite materials, coatings, powder metallurgy, multilayer ceramic capacitors, thermistors, piezoelectric ceramics, and battery materials.
